(19) Europäisches Patentamt / European Patent Office / Office européen des brevets

(11) **EP 3 806 472 A1**

(12) **EUROPEAN PATENT APPLICATION**
published in accordance with Art. 153(4) EPC

(43) Date of publication:
**14.04.2021 Bulletin 2021/15**

(51) Int Cl.:
*H04N 19/52* (2014.01)    *H04N 19/70* (2014.01)

(21) Application number: **19825522.6**

(22) Date of filing: **01.07.2019**

(86) International application number:
**PCT/KR2019/007981**

(87) International publication number:
**WO 2020/005045 (02.01.2020 Gazette 2020/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.06.2018 KR 20180076177**
**24.07.2018 KR 20180085680**

(71) Applicant: **GUANGDONG OPPO MOBILE TELECOMMUNICATIONS CORP., LTD.**
**Dongguan Guangdong 523860 (CN)**

(72) Inventor: **KIM, Ki Baek**
**Daejeon 35206 (KR)**

(74) Representative: **RGTH**
**Patentanwälte PartGmbB**
**Neuer Wall 10**
**20354 Hamburg (DE)**

(54) **MERGE MODE-BASED INTER-PREDICTION METHOD AND APPARATUS**

(57)    The present invention relates to a video encoding/decoding method and apparatus, which includes constructing a merge candidate list of a current block, deriving motion information of the current block from the merge candidate list, and performing inter-prediction of the current block using the motion information, where the merge candidate list includes at least one of a spatial merge candidate, a temporal merge candidate, or a combined merge candidate, and the combined merge candidate is derived by combining n merge candidates belonging to the merge candidate list. The present invention is advantageous in that accuracy of motion information can be improved using not only the spatial/temporal merge candidate but also the combined merge candidate.

```
┌─────────────────────────┐
│   ESTABLISH MERGE       │──── S600
│   CANDIDATE LIST         │
└─────────────────────────┘
          │
          ▼
┌─────────────────────────┐
│   DERIVE MOTION          │
│ INFORMATION OF CURRENT   │──── S610
│ BLOCK FROM MERGE         │
│ CANDIDATE LIST           │
└─────────────────────────┘
          │
          ▼
┌─────────────────────────┐
│ CARRY OUT INTER-PREDICTION│
│ USING MOTION INFORMATION │──── S620
│ OF CURRENT BLOCK         │
└─────────────────────────┘
```

FIG. 6

EP 3 806 472 A1

## Description

## BACKGROUND

**Technical Field**

The present invention relates to an inter-prediction method and apparatus.

**Related Art**

Recently, demand for high-resolution and high-quality videos such as high definition (HD) videos and ultra high definition (UHD) videos has been increasing in various application fields, and accordingly, a high-efficiency video compression technology has been discussed.

As the video compression technology, there are various technologies such as an inter-prediction technology for predicting a pixel value included in a current picture from a picture before or after the current picture, an intra-prediction technology for predicting a pixel value included in a current picture using pixel information in the current picture, an entropy coding technology for allocating short code to a value having high frequency of appearance and allocating long code to a value having low frequency of appearance, etc., and video data can be effectively compressed and transmitted or stored using such a video compression technology.

## SUMMARY

[Technical Problem]

An object of the present invention is to provide an inter-prediction method and apparatus.

An object of the present invention is to provide a method and apparatus for constructing a merge candidate list.

An object of the present invention is to provide a method and apparatus for motion compensation in units of sub-blocks.

An object of the present invention is to provide a method and an apparatus for determining an affine candidate.

An object of the present invention is to provide an inter-prediction method and apparatus according to a projection format of 360 video.

[Solution to Problem]

A video encoding/decoding method and apparatus according to the present invention may construct a merge candidate list of a current block, derive motion information of the current block from the merge candidate list, and perform inter-prediction of the current block using the motion information.

In the video encoding/decoding method and apparatus according to the present invention, the merge candidate list may include at least one of a spatial merge candidate, a temporal merge candidate, or a combined merge candidate.

In the video encoding/decoding method and apparatus according to the present invention, the combined merge candidate may be derived by combining n merge candidates belonging to the merge candidate list.

In the video encoding/decoding method and apparatus according to the present invention, the n merge candidates may be merge candidates corresponding to indices of 0 to (n-1) in the merge candidate list.

In the video encoding/decoding method and apparatus according to the present invention, an index of the combined merge candidate may be greater than an index of the temporal merge candidate.

In the video encoding/decoding method and apparatus according to the present invention, the n merge candidates may include a first merge candidate and a second merge candidate, and motion information of the combined merge candidate may be derived in consideration of a prediction direction of the first merge candidate and a prediction direction of the second merge candidate.

In the video encoding/decoding method and apparatus according to the present invention, the motion information of the combined merge candidate may be derived by a weighted average of motion information of the first merge candidate and motion information of the second merge candidate.

In the video encoding/decoding method and apparatus according to the present invention, a weight of the weighted average may be any one of [1:1], [1:2], [1:3], or [2:3].

A video encoding/decoding method and apparatus according to the present invention may generate a candidate list for predicting motion information of a current block, derive a control point vector of the current block based on the candidate list and a candidate index, derive a motion vector of the current block based on the control point vector of the current block, and perform inter-prediction on the current block using the motion vector.

In the video encoding/decoding apparatus according to the present invention, the candidate list may include a plurality of affine candidates.

In the video encoding/decoding apparatus according to the present invention, the affine candidates may include at least one of a spatial candidate, a temporal candidate, or a configured candidate.

In the video encoding/decoding apparatus according to the present invention, the motion vector of the current block may be derived in units of sub-blocks of the current block.

In the video encoding/decoding apparatus according to the present invention, the spatial candidate may be determined in consideration of whether a boundary of the current block is in contact with a boundary of a coding tree block (CTU boundary).

In the video encoding/decoding apparatus according to the present invention, the configured candidate may be determined based on a combination of at least two of control point vectors corresponding to respective corners of the current block.

In the video encoding/decoding method and apparatus according to the present invention, when a reference region for inter-prediction includes a boundary of a reference picture or a boundary between discontinuous surfaces, all or some of pixels in the reference region may be obtained using data of a correlated region.

[Advantageous Effects of Invention]

According to the present invention, accuracy of motion information can be improved by using not only the spatial/temporal merge candidate but also the combined merge candidate.

According to the present invention, encoding/decoding performance of a video can be improved through inter-prediction based on an affine model.

According to the present invention, prediction accuracy can be improved through inter-prediction in units of sub-blocks.

According to the present invention, encoding/decoding efficiency of inter-prediction can be improved through efficient affine candidate determination.

According to the present invention, coding efficiency of inter-prediction can be improved by setting a reference region in consideration of correlation.

## BRIEF DESCRIPTION OF THE DRAWINGS

FIG. 1 is a block diagram of a video encoding apparatus according to an embodiment of the present invention.

FIG. 2 is a block diagram of a video decoding apparatus according to an embodiment of the present invention.

FIG. 3 is an exemplary diagram illustrating a tree-based block shape.

FIG. 4 is an exemplary diagram illustrating various types of blocks that can be obtained from a block partition section of the present invention.

FIG. 5 illustrates a block partition process according to an embodiment of the present invention.

FIG. 6 illustrates a method of performing inter-prediction based on a block-based merge mode as an embodiment to which the present invention is applied.

FIG. 7 illustrates an inter-prediction method based on an affine model as an embodiment to which the present invention is applied.

FIG. 8 relates to a method of deriving an affine candidate from control point vectors of a spatial/temporal neighboring block as an embodiment to which the present invention is applied.

FIG. 9 illustrates a method of deriving a configured candidate based on a combination of motion vectors of spatial/temporal neighboring blocks as an embodiment to which the present invention is applied.

FIG. 10 is a diagram illustrating a method of deriving motion information of a sub-block-based temporal candidate as an embodiment to which the present invention is applied.

FIG. 11 illustrates an inter-prediction method in an ERP projection format as an embodiment to which the present invention is applied.

FIGS. 12 and 15 illustrate an inter-prediction method in a CMP projection format as an embodiment to which the present invention is applied.

## DETAILED DESCRIPTION

A video encoding/decoding method and apparatus according to the present invention may construct a merge candidate list of a current block, derive motion information of the current block from the merge candidate list, and perform inter-prediction of the current block using the motion information.

In the video encoding/decoding method and apparatus according to the present invention, the merge candidate list may include at least one of a spatial merge candidate, a temporal merge candidate, or a combined merge candidate.

In the video encoding/decoding method and apparatus according to the present invention, the combined merge candidate may be derived by combining n merge candidates belonging to the merge candidate list.

In the video encoding/decoding method and apparatus according to the present invention, the n merge candidates may be merge candidates corresponding to indices of 0 to (n-1) in the merge candidate list.

In the video encoding/decoding method and apparatus according to the present invention, an index of the combined merge candidate may be greater than an index of the temporal merge candidate.

In the video encoding/decoding method and apparatus according to the present invention, the n merge candidates may include a first merge candidate and a second merge candidate, and motion information of the combined merge candidate may be derived in consideration of a prediction direction of the first merge candidate and a prediction direction of the second merge candidate.

In the video encoding/decoding method and apparatus according to the present invention, the motion information of the combined merge candidate may be derived by a weighted average of motion information of the first merge candidate and motion information of the second merge candidate.

In the video encoding/decoding method and apparatus according to the present invention, a weight of the weighted average may be any one of [1:1], [1:2], [1:3], or [2:3].

A video encoding/decoding method and apparatus according to the present invention may generate a candidate list for predicting motion information of a current block, derive a control point vector of the current block based on the candidate list and a candidate index, derive a motion vector of the current block based on the control point vector of the current block, and perform inter-prediction on the current block using the motion vector.

In the video encoding/decoding apparatus according to the present invention, the candidate list may include a plurality of affine candidates.

In the video encoding/decoding apparatus according to the present invention, the affine candidates may include at least one of a spatial candidate, a temporal candidate, or a configured candidate.

In the video encoding/decoding apparatus according to the present invention, the motion vector of the current block may be derived in units of sub-blocks of the current block.

In the video encoding/decoding apparatus according to the present invention, the spatial candidate may be determined in consideration of whether a boundary of the current block is in contact with a boundary of a coding tree block (CTU boundary).

In the video encoding/decoding apparatus according to the present invention, the configured candidate may be determined based on a combination of at least two of control point vectors corresponding to respective corners of the current block.

In the video encoding/decoding method and apparatus according to the present invention, when a reference region for inter-prediction includes a boundary of a reference picture or a boundary between discontinuous surfaces, all or some of pixels in the reference region may be obtained using data of a correlated region.

[Embodiments]

In the present invention, various modifications may be made and various embodiments may be provided, and specific embodiments will be illustrated in the drawings and described in detail. However, it should be understood that the present invention is not intended to these specific embodiments, but shall include all changes, equivalents, and substitutes that fall within the spirit and scope of the present invention.

The terms such as first, second, A, and B may be used to describe various components, but the components should not be limited by such terms. The terms are used only for the purpose of distinguishing one component from another component. For example, without departing from the scope of the present invention, a first component may be referred to as a second component, and similarly, a second component may be referred to as a first component. The term "and/or" includes a combination of a plurality of related listed items or any of a plurality of related listed items.

When a component is referred to as being "linked" or "connected" to another component, the component may be directly linked or connected to the other component. However, it should be understood that still another component may be present in the middle. On the other hand, when a component is referred to as being "directly linked" or "directly connected" to another component, it should be understood that there is no other component in the middle.

The terms used in the present application are only used to describe specific embodiments, and are not intended to limit the present invention. Singular expressions include plural expressions unless the context clearly indicates otherwise. In the present application, the term such as "include" or "have" is intended to designate the presence of features, numbers, steps, actions, components, parts, or combinations thereof described in the specification, and it should be understood that the term does not preclude the possibility of the presence or addition of one or more other features or numbers, steps, actions, components, parts, or combinations thereof.

Unless otherwise defined, all terms used herein, including technical or scientific terms, mean the same as commonly understood by one of ordinary skill in the art to which the present invention belongs. Terms such as those defined in a commonly used dictionary should be interpreted as being consistent with the meanings of the related technology, and are not interpreted as ideal or excessively formal meanings unless explicitly defined in the present application.

Video encoding and decoding apparatuses may be user terminals such as a personal computer (PC), a notebook computer, a personal digital assistant (PDA), a portable multimedia player (PMP), a PlayStation Portable (PSP), a wireless communication terminal, a smartphone, a TV, a virtual reality (VR) device, an augmented reality (AR) device, a mixed reality (MR) device, a head mounted display (HMD), and smart glasses, or server terminals such as an application server and a service server, and may include various devices equipped with a communication device such as a communication modem for performing communication with various devices or wired/wireless communication networks, a memory for storing various programs and data for encoding or decoding a video or for performing intra or inter-prediction for encoding or decoding, a processor for executing a program to perform computation and control operations, etc. In addition, a video encoded as a bitstream by a video encoding apparatus can be transmitted to a video decoding apparatus in real time or non-real time through a wired or wireless network such as the Internet, a local area wireless communication network, a wireless LAN network, a WiBro network, or a mobile communication network, or through various communication interfaces such as a cable and a universal serial bus (USB), decoded by the video decoding apparatus, and reconstructed and reproduced as a video.

In addition, the video encoded as a bitstream by the video encoding apparatus may be transmitted from the encoding apparatus to the decoding apparatus through a computer-readable recording medium.

The above-described video encoding apparatus and video decoding apparatus may be separate apparatuses, respectively. However, the apparatuses may be configured as one video encoding/decoding apparatus according to implementation. In this case, some components of the video encoding apparatus are substantially the same technical elements as some components of the video decoding apparatus and may be implemented to include at least the same structure or perform at least the same function as that of some components of the video decoding apparatus.

Therefore, redundant descriptions of corresponding technical elements will be omitted in the detailed description of the following technical elements and operating principles thereof.

In addition, since the video decoding apparatus corresponds to a computing device that applies a video encoding method performed by the video encoding apparatus to decoding, the following description will focus on the video encoding apparatus.

The computing device may include a memory storing a program or a software module implementing a video encoding method and/or a video decoding method, and a processor linked to the memory to perform a program. In addition, the video encoding apparatus may be referred to as an encoder and the video decoding apparatus may be referred to as a decoder.

Typically, a video may include a series of still images, and these still images may be classified in units of Group of Pictures (GOP), and each still image may be referred to as a picture. In this instance, the picture may represent one of a frame or a field in a progressive signal or an interlaced signal, and the video may be expressed as a 'frame' when encoding/decoding is performed on a frame basis and expressed as a 'field' when encoding/decoding is performed on a field basis. In the present invention, a progressive signal is assumed and described. However, the present invention is applicable to an interlaced signal. As a higher concept, units such as GOP and sequence may exist, and each picture may be partitioned into predetermined regions such as slices, tiles, and blocks. In addition, one GOP may include units such as a picture I, a picture P, and a picture B. The picture I may refer to a picture that is self-encoded/decoded without using a reference picture, and the picture P and the picture B may refer to pictures that are encoded/decoded by performing a process such as motion estimation and motion compensation using a reference picture. In general, the picture I and the picture P can be used as reference pictures in the case of the picture P, and the picture I and the picture P can be used as reference pictures in the case of the picture B. However, the above definition may be changed by setting encoding/decoding.

Here, a picture referred to for encoding/decoding is referred to as a reference picture, and a block or pixel referred to is referred to as a reference block or a reference pixel. In addition, reference data may be not only a pixel value in the spatial domain, but also a coefficient value in the frequency domain and various types of encoding/decoding information generated and determined during an encoding/decoding process. Examples thereof may correspond to information related to intra-prediction or information related to motion in a prediction section, information related to transformation in a transform section/inverse transform section, information related to quantization in a quantization section/inverse quantization section, information related to encoding/decoding (context information) in an encoding section/decoding section, information related to a filter in an in-loop filter section, etc.

The smallest unit constituting a video may be a pixel, and the number of bits used to represent one pixel is referred to as a bit depth. In general, the bit depth may be 8 bits, and a bit depth greater than 8 bits may be supported according to encoding settings. As the bit depth, at least one bit depth may be supported according to a color space. In addition, at least one color space may be included according to a color format of a video. One or more pictures having a certain size or one or more pictures having different sizes may be included according to a color format. For example, in the case of YCbCr 4:2:0, one luminance component (Y in this example) and two color difference components (Cb/Cr in this example) may be included. In this instance, a component ratio of the color difference components and the luminance component may be a ratio of 1:2 in width and height. As another example, in the case of 4:4:4, the width and the height may be the same in the component ratio. In the case of including one or more color spaces as in the above example, a picture may be partitioned into the respective color spaces.

In the present invention, description will be made based on some color spaces (Y in this example) of some color formats (YCbCr in this example), and the same or similar application (setting dependent on a specific color space) can be applied to other color spaces (Cb and Cr in this example) according to the color format. However, partial differences (independent setting for a specific color space) can be made in each color space. In other words, setting dependent on each color space may mean having setting proportional to or dependent on a component ratio of each component (for example, 4:2:0, 4:2:2, 4:4:4, etc.), and independent setting for each color space may mean having setting of only the corresponding color space regardless of or independent of the component ratio of each component. In the present invention, depending on the encoder/decoder, some configurations may have independent or dependent settings.

Configuration information or a syntax element required in a video encoding process may be determined at a unit level such as video, sequence, picture, slice, tile, block, etc., included in a bitstream in units such as video parameter set (VPS), sequence parameter set (SPS), picture parameter set (PPS), slice header, tile header, block header, etc., and transmitted to the decoder, and the decoder may perform parsing in units of the same level to reconstruct the setting information transmitted from the encoder and use the reconstructed setting information in a video decoding process. In addition, related information may be transmitted as a bitstream in the form of supplement enhancement information (SEI) or metadata, and may be parsed and used. Each parameter set has a unique ID value, and a lower parameter set may have an ID value of an upper parameter set to be referred to. For example, a lower parameter set may refer to information of an upper parameter set having a matching ID value among one or more upper parameter sets. Among the examples of various units mentioned above, when one unit includes one or more other units, the corresponding unit may be referred to as an upper unit, and the included unit may be referred to as a lower unit.

Setting information generated in the unit may contain content on an independent setting for each unit or contain content on a setting dependent on a previous, subsequent, or upper unit, etc. Here, the dependent setting may be understood as indicating the setting information of the corresponding unit as flag information indicating that the setting of the previous, subsequent, or upper unit is followed (for example, a 1-bit flag, the setting is followed in the case of 1 and not followed in the case of 0). Description of the setting information in the present invention will focus on an example of an independent setting. However, an example of adding or replacing content on a relationship dependent on setting information of a previous or subsequent unit of a current unit, or an upper unit may be included.

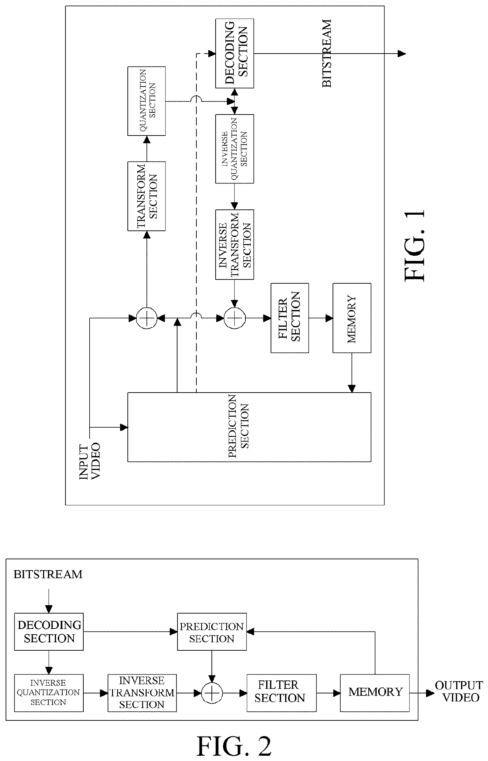

FIG. 1 is a block diagram of a video encoding apparatus according to an embodiment of the present invention. FIG. 2 is a block diagram of a video decoding apparatus according to an embodiment of the present invention.

Referring to FIG. 1, the video encoding apparatus may include a prediction section, a subtraction section, a transform section, a quantization section, an inverse quantization section, an inverse transform section, an addition section, an in-loop filter section, a memory, and/or an encoding section. Some of the above components may not be necessarily included, some or all components may be selectively included depending on the implementation, and some additional components not illustrated in the figure may be included.

Referring to FIG. 2, the video decoding apparatus may include a decoding section, a prediction section, an inverse quantization section, an inverse transform section, an addition section, an in-loop filter section, and/or a memory. Some of the above components may not be necessarily included, some or all components may be selectively included depending on the implementation, and some additional components not illustrated in the figure may be included.

The video encoding apparatus and the video decoding apparatus may be separate devices, respectively, or may be made as one video encoding/decoding apparatus according to implementation. In this case, some components of the video encoding apparatus are substantially the same technical elements as some components of the video decoding apparatus and may be implemented to include at least the same structure or perform at least the same function as that of some components of the video decoding apparatus. Therefore, redundant descriptions of corresponding technical elements will be omitted in the detailed description of the following technical elements and operating principles thereof. Since the video decoding apparatus corresponds to a computing device that applies a video encoding method performed by the video encoding apparatus to decoding, the following description will focus on the video encoding apparatus. The video encoding apparatus may be referred to as an encoder and the video decoding apparatus may be referred to as a decoder.

The prediction section may include an intra-prediction section that performs intra-prediction and an inter-prediction section that performs inter-prediction. In intra-prediction, an intra-prediction mode may be determined by configuring a pixel of a block adjacent to a current block as a reference pixel, and a prediction block may be generated using the intra-prediction mode. In inter-prediction, a prediction block may be generated by determining motion information of a current block using one or more reference videos and performing motion compensation using the motion information. One of intra-prediction and inter-prediction to be used for a current block (coding unit or prediction unit) may be determined, and specific information (for example, intra-prediction mode, motion vector, reference video, etc.) according to each prediction method may be determined. In this instance, a processing unit in which prediction is performed and a processing unit in which a prediction method and specific content are determined may be determined according to an encoding/decoding setting. For example, a prediction method, a prediction mode, etc. are determined in a prediction unit (or coding unit), and prediction is performed in a prediction block unit (or coding unit or transform unit).

The subtraction section generates a residual block by subtracting the prediction block from the current block. That is, the subtraction section calculates a difference between a pixel value of each pixel in the current block to be encoded and a predicted pixel value of each pixel in the prediction block generated through the prediction section to generate a residual block, which is a residual signal in the form of a block.

The transform section may transform a signal belonging to the spatial domain into a signal belonging to the frequency domain, and at this time, a signal obtained through the transformation process is referred to as a transformed coefficient. For example, a transform block having a transformed coefficient may be obtained by transforming a residual block having a residual signal received from the subtraction section, and the received signal is determined according to an encoding setting and is not limited to the residual signal.

The transform section can transform the residual block using a transformation scheme such as Hadamard transform, DST based-transform (discrete sine transform), or DCT based-transform (discrete cosine transform). However, the transformation scheme is not limited thereto, and it is possible to use various transformation schemes obtained by improving and modifying this transformation scheme.

The transformation can be performed in a horizontal/vertical direction. For example, using a basis vector in the transformation, a total two-dimensional transformation may be performed by performing a one-dimensional transformation in the horizontal direction and performing a one-dimensional transformation in the vertical direction, thereby transforming a pixel value in the spatial domain into a pixel value in the frequency domain.

In addition, the transform section can transmit information necessary to generate the transform block to the encoding section so that the information is encoded, include the corresponding information in the bitstream, and transmit the information to the decoder, and the decoding section of the decoder can parse the information and use the information for an inverse transformation process.

The quantization section may quantize an input signal, and at this time, a signal obtained through a quantization process is referred to as a quantized coefficient. For example, a quantization block having a quantized coefficient may be obtained by quantizing a residual block having a residual transformed coefficient received from the transform section, and an input signal is determined according to an encoding setting, which is not limited to the residual transformed coefficient.

The quantization section can quantize the transformed residual block using a quantization scheme such as dead zone uniform threshold quantization and quantization weighted matrix. However, the quantization scheme is not limited thereto, and it is possible to use various quantization schemes obtained by improving and modifying this quantization scheme.

The quantization section can transmit information necessary to generate the quantization block to the encoding section so that the information is encoded, include the corresponding information in the bitstream, and transmit the information to the decoder, and the decoding section of the decoder can parse the information and use the information for an inverse quantization process.

In the above example, the description has been made on the assumption that the residual block is transformed and quantized through the transform section and the quantization section. However, the residual signal of the residual block may be transformed to generate a residual block having a transformed coefficient, and the quantization process may not be performed. Alternatively, the residual signal of the residual block may not be transformed into the transformed coefficient, and only the quantization process may be performed. Alternatively, neither the transformation nor quantization process may be performed. Determination can be made according to the encoder setting.

The encoding section can scan the quantized coefficient, the transformed coefficient, the residual signal, etc. of the generated residual block according to at least one scan order (for example, zigzag scan, vertical scan, horizontal scan, etc.) to generate a quantized coefficient sequence, a transformed coefficient sequence, or a signal sequence, and perform encoding using at least one entropy coding scheme. In this instance, information about the scan order may be determined according to an encoding setting (for example, an encoding mode, a prediction mode, etc.), and related information may be implicitly determined or explicitly generated. For example, one of a plurality of scan orders may be selected according to the intra-prediction mode. In this instance, a scan pattern may be set to one of various patterns such as Zig-Zag, diagonal lines, and raster.

In addition, encoding data including encoding information transmitted from each component may be generated and output as a bitstream, which may be implemented by a multiplexer (MUX). In this instance, encoding can be performed using, as an encoding scheme, a method such as exponential Golomb, context adaptive variable length coding (CAVLC), or context adaptive binary arithmetic coding (CABAC). However, the encoding scheme is not limited thereto, and it is possible to use various encoding schemes obtained by improving and modifying this encoding scheme.

When performing entropy encoding (assuming CABAC in this example) on the residual block data and a syntax element such as information generated in the encoding/decoding process, an entropy encoding apparatus may include a binarizer, a context modeler, and a binary arithmetic coder. In this instance, the binary arithmetic coder may include a regular coding engine and a bypass coding engine. In this instance, the regular coding engine may be a process performed in relation to the context modeler, and the bypass coding engine may be a process performed regardless of the context modeler.

Since the syntax element input to the entropy encoding apparatus may not be a binary value, when syntax elements are not binary values, the binarizer may binarize the syntax elements and output a bin string including 0 or 1. In this instance, the bin represents a bit including 0 or 1, and may be encoded through the binary arithmetic coder. In this instance, one of the regular coding engine or the bypass coding engine may be selected based on a probability of occurrence of 0 and 1, which may be determined according to a coding/decoding setting. The bypass coding engine can be used when the syntax element is data whose frequencies of 0 and 1 are the same, and the regular coding engine can be used otherwise, which can be referred to when a subsequent regular coding engine is performed through context modeling (or context information update).

In this instance, the context is information about a probability of occurrence of a bin, and context modeling is a process of estimating a probability of a bin required for binary arithmetic coding using a bin, which is a result of binarization, as an input. For probability estimation, syntax element information of a bin, an index that is a position of a bin in a bin string, a probability of a bin included in a block adjacent to a block, etc. may be used, and at least one context table therefor may be used. For example, as information for some flags, a plurality of context tables may be used according to a combination of whether or not flags of neighboring blocks are used.

Various methods can be used when performing binarization on the syntax element. For example, the methods can be divided into fixed length binarization and variable length binarization. In the case of variable length binarization, it is possible to use unary binarization (truncated unary binarization), rice binarization (truncated rice binarization), k-th exp-Golomb binarization, truncated binary binarization, etc. In addition, signed binarization or unsigned binarization may be performed according to a range of values of a syntax element. A binarization process for the syntax element occurring in the present invention may be performed including not only the binarization mentioned in the above example, but also other additional binarization methods.

The inverse quantization section and the inverse transform section may be implemented by inversely performing processes in the transform section and the quantization section. For example, the inverse quantization section may inverse quantize a quantized transformed coefficient generated by the quantization section, and the inverse transform section may inversely transform the inverse quantized transformed coefficient to generate a reconstructed residual block.

The addition section reconstructs a current block by adding a prediction block and a reconstructed residual block. The reconstructed block may be stored in the memory and used as reference data (the prediction section, the filter unit, etc.).

The in-loop filter section may include at least one post-processing filter process such as a deblocking filter, a sample adaptive offset (SAO), and an adaptive loop filter (ALF). The deblocking filter may remove block distortion occurring at a boundary between blocks in a reconstructed video. The ALF may perform filtering based on a value obtained by comparing a reconstructed video and an input video. In detail, after a block is filtered through the deblocking filter, filtering may be performed based on a value obtained by comparing a reconstructed video and an input video. Alternatively, after a block is filtered through the SAO, filtering may be performed based on a value obtained by comparing a reconstructed video and an input video.

The memory may store the reconstructed block or picture. The reconstructed block or picture stored in the memory may be provided to the prediction section that performs intra-prediction or inter-prediction. In detail, a storage space in the form of a queue of the bitstream compressed by the encoder may be placed and processed as a coded picture buffer (CPB), and a space for storing a decoded video in units of pictures may be placed and processed as a decoded picture buffer (DPB). In the case of CPB, decoding units are stored according to a decoding order, a decoding operation is emulated within the encoder, a bitstream compressed during the emulation process can be stored, the bitstream output from the CPB is reconstructed through a decoding process, the reconstructed video is stored in the DPB, and pictures stored in the DPB may be referred to in a subsequent video encoding and decoding process.

The decoding section may be implemented by performing a process in the encoding section in reverse. For example, a quantized coefficient sequence, a transformed coefficient sequence, or a signal sequence may be received from a bitstream and decoded, and decoding data including decoding information may be parsed and transmitted to each component.

A block partition section may be included in the video encoding apparatus and the video decoding apparatus according to the embodiments of the present invention. A basic coding unit may mean a basic (or start) unit for prediction, transformation, quantization, etc. in a video encoding/decoding process. In this instance, the coding unit may include one luminance encoding block and two color difference encoding blocks according to a color format (YCbCr in this example), and the size of each block may be determined according to the color format. In an example to be described later, a description will be given based on a block (luminance component in this example). In this instance, it is presumed that a block is a unit that can be obtained after each unit is determined, and a description will be given on the assumption that similar settings can be applied to other types of blocks.

The block partition section may be set in relation to each component of the video encoding apparatus and decoding apparatus, and the size and shape of the block may be determined through this process. In this instance, the set block may be defined differently depending on the component, and may correspond to a prediction block in the case of the prediction section, a transform block in the case of the transform section, and a quantization block in the case of the quantization section. The present invention is not limited thereto, and block units according to other components may be additionally defined. The size and shape of the block may be defined by the horizontal and vertical lengths of the block.

In the block partition section, a block may be expressed as $M \times N$, and maximum and minimum values of each block can be obtained within a range. For example, when the shape of the block supports a square, and the maximum value of the block is set to $256 \times 256$ and the minimum value of the block is set to $8 \times 8$, it is possible to obtain a block having a size of $2m \times 2m$ (in this example, m is an integer from 3 to 8, for example, $8 \times 8$, $16 \times 16$, $32 \times 32$, $64 \times 64$, $128 \times 128$, or $256 \times 256$), a block having a size of $2m \times 2m$ (in this example, m is an integer from 4 to 128), or a block having a size of $m \times m$ (in this example, m is an integer from 8 to 256). Alternatively, in the case where the shape of the block supports a square and a rectangle and having the same range as that of the above example, it is possible to obtain a block having a size of $2m \times 2n$ (in this example, m and n are integers from 3 to 8, for example, $8 \times 8$, $8 \times 16$, $16 \times 8$, $16 \times 16$, $16 \times 32$, $32 \times 16$, $32 \times 32$, $32 \times 64$, $64 \times 32$, $64 \times 64$, $64 \times 128$, $128 \times 64$, $128 \times 128$, $128 \times 256$, $256 \times 128$, or $256 \times 256$ on the assumption that a ratio of width to height is a maximum of 2:1, and there may be no limit on the ratio of width to height, or there may be a maximum value of the ratio depending on the encoding/decoding setting). Alternatively, it is possible to obtain a block having a size of $2m \times 2n$ (in this example, m and n are integers from 4 to 128). Alternatively, it is possible to obtain a block having a size of $m \times n$ (in this example, m and n are integers from 8 to 256).

In the block partition section, the input block may obtain one or more blocks. For example, the input block may be output without change, or may be obtained by being partitioned into two or more sub-blocks. In this instance, the number of sub-blocks may be 2, 3, 4, etc., and may be determined according to a partitioning scheme (partitioning type). The shape of the sub-block may be obtained based on a block before partitioning (in this example, an input block), and various shapes may be obtained according to a block partition setting.

In the present invention, a description will be made based on a tree-based partitioning scheme. However, the present invention is not limited thereto.

Obtainable blocks may be determined according to encoding/decoding settings (for example, type of block, partitioning scheme, partition setting, etc.). For example, a block having a size of $2m \times 2n$ may be obtained as an encoding block, a block having a size of $2m \times 2n$ or $m \times n$ may be obtained as a prediction block, and a block having a size of $2m \times 2n$ may be obtained as a transform block. Information about a block size, a range, etc. (for example, information related to index and multiple, etc.) may be generated based on the setting.

The range (determined as a maximum value and a minimum value in this example) may be determined according to the type of block. In addition, for some blocks, block range information may be explicitly generated, and for some blocks, block range information may be implicitly determined. For example, related information may be explicitly generated in the encoding and transform block, and related information may be implicitly processed in the prediction block.

In an explicit case, at least one piece of range information may be generated. For example, in the case of an encoding block, information about a maximum value and a minimum value may be generated as information about a range. Alternatively, the information may be generated based on a difference between a maximum value and a preset minimum value (for example, 8) (for example, generated based on the setting, information about a difference value between indices of a maximum value and a minimum value, etc.). In addition, information about a plurality of ranges for the horizontal and vertical lengths of a rectangular block may be generated.

In the implicit case, range information may be obtained based on the encoding/decoding setting (for example, block type, partitioning scheme, partition setting, etc.). For example, in the case of the prediction block, information about a maximum value and a minimum value may be obtained as a candidate group (in this example, $M \times N$ and $m/2 \times n/2$) that can be obtained by partition setting of the prediction block (for example, quad tree partition + partition depth 0) in the encoding block (for example, the maximum size of the encoding block is $M \times N$, and the minimum size of the encoding block is $m \times n$) which is an upper unit.

The size and shape of the initial (or start) block of the block partition section may be determined from an upper unit. A basic coding block may be the initial block in the case of the encoding block, an encoding block may be the initial block in the case of the prediction block, and an encoding block or a prediction block may be the initial block in the case of the transform block, which may be set according to encoding/decoding setting.

For example, when the encoding mode is Intra, the prediction block may be an upper unit of the transform block, and when the encoding mode is Inter, the prediction block may be an independent unit of the transform block. The initial block can be partitioned into blocks of small sizes as the start unit of partitioning. When an optimal size and shape according to partitioning of each block are determined, the block may be determined as an initial block of a lower unit. For example, the block may be the encoding block in the former case, and may be the prediction block or the transform block in the latter case (subunit). When the initial block of the lower unit is determined as in the above example, a partition process may be performed to find a block having an optimal size and shape as the upper unit.

In summary, the block partition section may partition the basic coding unit (or the largest coding unit) into at least one coding unit (or lower coding unit). In addition, the coding unit may be partitioned into at least one prediction unit, and may be partitioned into at least one transform unit. The coding unit may be partitioned into at least one encoding block, the encoding block may be partitioned into at least one prediction block, and may be partitioned into at least one transform block. The prediction unit may be partitioned into at least one prediction block, and the transform unit may be partitioned into at least one transform block.

As in the above example, when a block having an optimal size and shape is found through a mode determination process, mode information (for example, partition information, etc.) for this block may be generated. The mode information may be included in a bitstream along with information generated from a component to which the block belongs (for example, prediction-related information, transformation-related information, etc.) and transmitted to the decoder, and may be parsed in the same level unit in the decoder and used in a video decoding process.

In the example described later, a partitioning scheme will be described, and a description will be given on the assumption that an initial block has a square shape. However, in the case of a rectangular shape, the same or similar application is allowed.

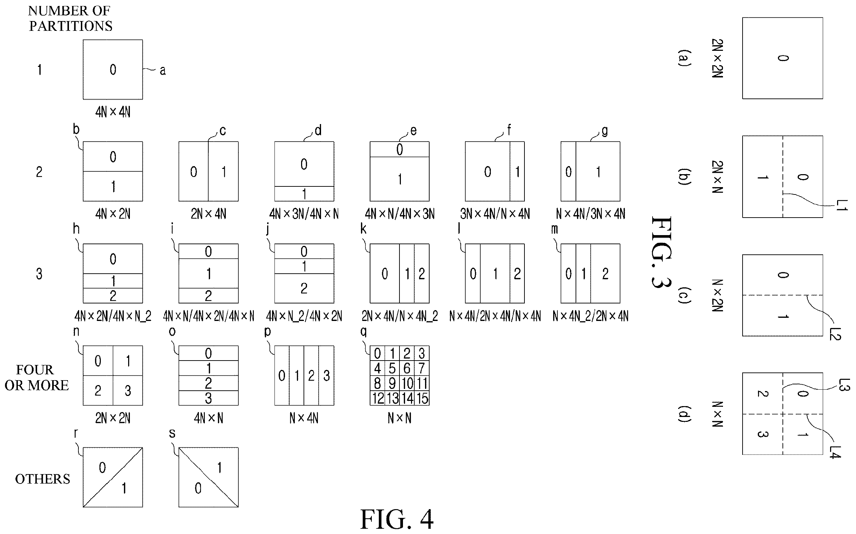

FIG. 3 is an exemplary diagram illustrating a tree-based block shape.

Examples of obtaining blocks are illustrated, in which "a" illustrates one $2N \times 2N$ block which is not partitioned, "b" illustrates two $2N \times N$ blocks obtained through a partial partition flag (horizontal partition of a binary tree in this example), "c" illustrates two $N \times 2N$ blocks obtained through a partial partition flag (vertical partition of a binary tree in this example), and "d" illustrates four $N \times N$ blocks obtained through a partial partition flag (four partitions of a quad tree in this example). The shape of the obtained block may be determined according to the type of the tree used for partitioning. For example, when quad tree partitioning is performed, obtainable candidate blocks may be blocks "a" and "d". When binary tree partitioning is performed, obtainable candidate blocks may be blocks "a", "b", and "c". In the case of a quad tree, one partition flag is supported. The block "a" can be obtained when the partition flag is '0', and the block "b" can be obtained when the partition flag is '1'. In the case of a binary tree, a plurality of partition flags is supported, one of which may be a flag indicating whether partitioning is performed, and one of which may be a flag indicating whether partitioning is performed horizontally/vertically. In the case of a quad tree, a basic tree-based partitioning scheme may be used. In addition, a tree partitioning scheme (a binary tree in this example) may be included in the tree-based partitioning scheme. When a flag allowing additional tree partitioning is implicitly or explicitly activated, a plurality of tree partitioning can be performed. The tree-based partitioning may be a method that allows recursive partitioning. That is, a partitioned block may be set as an initial block again to perform tree-based partitioning, which may be determined according to partition settings such as a partition range and a partition allowable depth. This scheme may be an example of a hierarchical partitioning scheme.

FIG. 4 is an exemplary diagram illustrating various types of blocks that can be obtained from a block partition section of the present invention.

Referring to FIG. 4, blocks "a" to "s" may be obtained according to a partition setting and a partitioning scheme, and an additional block shape not illustrated may be possible.

As an example (1), asymmetric partitioning may be allowed for tree-based partitioning. For example, in the case of a binary tree, blocks such as blocks "b" and "c" may be possible, or blocks such as blocks "b" to "g" may be possible. When a flag allowing asymmetric partitioning is explicitly or implicitly deactivated according to the encoding/decoding setting, the obtainable candidate block may be blocks "b" or "c", and when the flag allowing asymmetric partitioning is activated, the obtainable candidate block may be blocks "b", "d", and "e" (horizontal partitioning in this example) or blocks "c", "f", and "g" (vertical partitioning in this example).

In the above example, a description is given on the assumption that a length ratio of left: right or upper: lower of the asymmetric partitioning is 1:3 or 3:1. However, the present invention is not limited thereto, and it may be possible to have a candidate group having another ratio (for example, 1:2, 1:4, 2:3, 2:5, 3:5, etc.) according to the encoding setting.

The following shows various examples of partition information generated in binary tree partitioning (candidate groups of 1:1, 1:3, and 3:1 in this example).

For example, in addition to a flag indicating whether partitioning is performed and a flag indicating a partition direction, a flag indicating a partition shape may be generated. In this instance, the partition shape may refer to symmetric or asymmetric partitioning. Among these types, when asymmetric partitioning is determined as the partition shape, a flag indicating a partitioning ratio may be generated, and an index may be allocated according to a preset candidate group. When a partitioning ratio of 1:3 or 3:1 is supported as a candidate group, a partitioning ratio can be selected through a 1-bit flag.

In addition to the flag indicating whether partitioning is performed and the flag indicating the partition direction, a flag indicating a partitioning ratio may be generated. In this example, a group having a symmetric ratio of 1:1 may be included as a candidate group for the partitioning ratio.

In the present invention, it is presumed that the binary tree partitioning has the same configuration as that in the former example (where the flag allowing asymmetric partitioning is activated). Unless otherwise specified, a binary tree refers to a symmetric binary tree.

As an example (2), additional tree partitioning may be allowed for tree-based partitioning. For example, it is possible to perform partitioning of a ternary tree, a quad type tree, an octa tree, etc., through which n partition blocks (3, 4, and 8 in this example, n is an integer) can be obtained. In the case of the ternary tree, supported blocks (when partitioned into a plurality of blocks in this example) may be blocks h to m. In the case of the quad type tree, supported blocks may be blocks n to p. In the case of the octa tree, a supported block may be a block q. Whether to support the tree-based partitioning may be implicitly determined according to the encoding/decoding setting, or related information may be explicitly generated. In addition, depending on the encoding/decoding setting, the partitioning may be used alone or may be used in combination with binary tree or quad tree partitioning.

For example, in the case of the binary tree, blocks such as blocks b and c may be possible. When a binary tree and a ternary tree are used in combination (in this example, it is presumed that a use range of the binary tree and a use range of the ternary tree are partially overlapped), blocks such as blocks b, c, i, and 1 may be possible. When the flag allowing additional partitioning other than the existing tree is explicitly or implicitly deactivated according to the encoding/decoding setting, an obtainable candidate block may be the block b or c. When the flag is activated, the obtainable candidate block may be the blocks b and i or the blocks b, h, i, and j (horizontal partitioning in this example), or may be the blocks c and 1 or the blocks c, k, 1, and m (vertical partitioning in this example).

In the above example, a description is given on the assumption that the length ratio of left: middle: right or upper:middle:lower of the ternary tree partitioning is 2:1:1 or 1:2:1 or 1:1:2. However, the present invention is not limited thereto, and other ratios may be possible depending on the encoding setting.

The following is an example of partition information generated in ternary tree partitioning (a candidate of 1:2:1 in this example).

For example, a flag indicating a partition type may be generated in addition to the flag indicating whether partitioning is performed and the flag indicating the partition direction. In this instance, the partition type may refer to binary tree or ternary tree partitioning.

In the present invention, it is possible to apply an adaptive encoding/decoding setting according to the partitioning scheme.

As an example, a partitioning scheme may be determined according to the type of the block. For example, quad tree partitioning can be used for the encoding block and the transform block, and a quad tree and binary tree (or ternary tree, etc.) partitioning scheme can be used for the prediction block.

As an example, a partitioning scheme may be determined according to the size of the block. For example, quad tree partitioning can be performed for a partial range (for example, $a \times b$ to $c \times d$, when the latter is of larger size) between the maximum value and the minimum value of the block, and binary tree (or ternary tree, etc.) partitioning can be performed for a partial range (for example, $e \times f$ to $g \times h$). In this instance, range information according to the partitioning scheme may be explicitly generated or may be implicitly determined, and the ranges may overlap.

As an example, the partitioning scheme may be determined according to the shape of the block (or block before partitioning). For example, when the block has a square shape, quad tree and binary tree (or ternary tree, etc.) partitioning can be performed. Alternatively, when the block has a rectangular shape, partitioning based on the binary tree (or ternary tree, etc.) can be performed.

As an example, partition setting may be determined according to the type of the block. For example, in tree-based partitioning, quad tree partitioning can be used for the encoding block and the prediction block, and binary tree partitioning can be used for the transform block. Alternatively, an allowable partitioning depth may be set to m in the case of the encoding block, the allowable partitioning depth may be set to n in the case of the prediction block, and the allowable partitioning depth may be set to o in the case of the transform block. Further, m, n and o may or may not be the same.

As an example, partition setting may be determined according to the size of the block. For example, quad tree partitioning can be performed for a partial range of the block (for example, a×b to c×d), binary tree partitioning can be performed for a partial range (for example, e×f to g×h, in this example, it is presumed that c×d is larger than g×h), and ternary tree partitioning can be performed for a partial range (for example, i×j to k×1, in this example, it is presumed that g×h is larger than or equal to k×1). In this instance, the range may include all ranges between the maximum value and the minimum value of the block, and the ranges may be set not to overlap each other or to overlap each other. For example, the minimum value of the partial range may be the same as the maximum value of the partial range, or the minimum value of the partial range may be less than the maximum value of the partial range. In the case of overlapping ranges, a partitioning scheme having a higher maximum value may have priority, or information about which partitioning scheme to use may be explicitly generated. That is, in the partitioning scheme having the priority, whether or not to perform a partitioning scheme having a lower priority may be determined according to a result of partitioning, or a partitioning scheme to be used may be determined according to partitioning scheme selection information.

As an example, partition setting may be determined according to the shape of the block. For example, when the block has a square shape, quad tree partitioning can be performed. Alternatively, when the block has a rectangular shape, binary tree or a ternary tree partitioning can be performed.

As an example, partition setting may be determined according to encoding/decoding information (for example, a slice type, a color component, an encoding mode, etc.). For example, quad tree (or binary tree or ternary tree) partitioning can be performed in a partial range (for example, a×b to c×d) when the slice type is I, can be performed in a partial range (for example, e×f to g×h) when the slice type is P, and can be performed in a partial range (for example, i×j to k×1) when the slice type is B. In addition, an allowable partitioning depth of quad tree (or binary tree or ternary tree) partitioning can be set to m when the slice type is I, can be set to n when the slice type is P, and can be set to o when the slice type is B. Here, m, n, and o may be or may not be the same. Some slice types may have the same configuration as that of other slices (for example, P and B slices).

As another example, the allowable partitioning depth of quad tree (or binary tree or ternary tree) partitioning can be set to m when the color component is a luminance component, and can be set to n when the color component is a color difference component, and m and n may be or may not be the same. In addition, a range of quad tree (or binary tree or ternary tree) partitioning in the case where the color component is the luminance component (for example, a×b to c×d) may be or may not be the same as a range of quad tree (or binary tree or ternary tree) partitioning in the case where the color component is the color difference component (for example, e×f to g×h).

As another example, the allowable partitioning depth of quad tree (or binary tree or ternary tree) partitioning may be m when the encoding mode is Intra, and may be n (in this example, n is presumed to be larger than m) when the encoding mode is Inter. Here, m and n may be or may not be the same. In addition, the range of quad tree (or binary tree or ternary tree) partitioning in the case where the encoding mode is Intra may be or may not be the same as the range of quad tree (or binary tree or ternary tree) partitioning in the case where the encoding mode is Inter.

In the case of the above example, information about whether to support adaptive partitioning candidate group configuration according to encoding/decoding information may be explicitly generated or may be implicitly determined.

Through the above example, the case where the partitioning scheme and the partition setting are determined according to the encoding/decoding setting has been described. The above example shows some cases according to each element, and modification into other cases may be possible. In addition, the partitioning scheme and the partition setting may be determined according to a combination of a plurality of elements. For example, the partitioning scheme and the partition setting may be determined according to the type, size, shape, encoding/decoding information, etc. of the block.

In addition, in the above example, factors involved in the partitioning scheme, setting, etc. may be implicitly determined or information may be explicitly generated to determine whether to allow the adaptive case as in the above example.

In the partition setting, a partition depth refers to the number of times of spatial partitioning with respect to the initial block (in this example, the partition depth of the initial block is 0), and partitioning into smaller blocks can be performed as the partition depth increases. A depth-related setting may vary according to the partitioning scheme. For example, among the methods of performing tree-based partitioning, one common depth can be used for the partition depth of the binary tree and the partition depth of the ternary tree, and different depths can be used for the partition depth of the quad tree and the partition depth of the binary tree. In this way, individual depths can be used depending on the tree type.

In the above example, when an individual partition depth is used according to the tree type, the partition depth may be set to 0 at a partition start position (block before partitioning in this example) of the tree. The partition depth may be calculated based on a position where partitioning starts, not based on a partition range of each tree (the maximum value in this example).

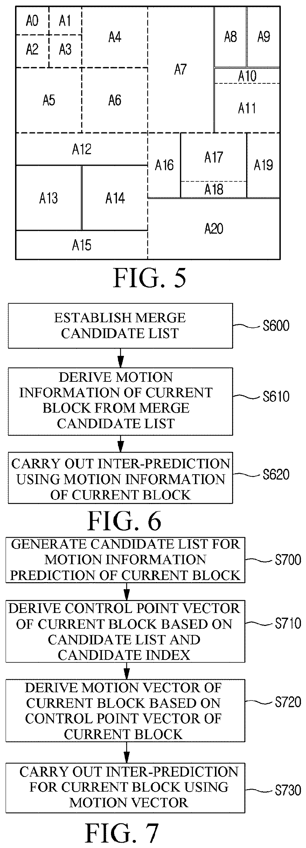

FIG. 5 illustrates a block partition process according to an embodiment of the present invention. In detail, the figure illustrates an example of a size and shape of a block obtainable according to one or more partitioning methods starting with a basic coding block.

In the figure, a thick solid line represents a basic encoding block, a bold dotted line represents a quad tree partition boundary, a double solid line represents a symmetric binary tree partition boundary, a solid line represents a ternary tree partition boundary, and a thin dotted line represents an asymmetric binary tree partition boundary. Except for the thick solid line, each line represents a boundary divided according to each partitioning method. Partition settings (for example, a partition type, partition information, a partition information configuration order, etc.) described below are not limited to the case of the corresponding example, and various modifications may be made.

For convenience of description, a description will be given on the assumption that individual block partition settings are set for upper left, upper right, lower left, and lower right blocks (NxN. 64x64) with reference to the basic encoding block (2Nx2N. 128x128). First, four sub-blocks are obtained due to one partitioning operation (partition depth 0 -> 1, that is, partition depth increases by 1) in the initial block, and the maximum encoding block is 128x128, the minimum encoding block is 8x8, and the maximum partition depth is 4 due to a partition setting for the quad tree, which is presumed to be a setting commonly applied to each block.

(No. 1, upper left block, A1 to A6)

In this example, partitioning of a single tree method (quad tree in this example) is supported, and a size and a shape of a block that can be obtained through one block partition setting such as a maximum encoding block, a minimum encoding block, and a partition depth may be determined. This example is the case where there is one block that can be obtained according to partitioning (partitioning the width and the height into two parts, respectively). Partition information required for one partitioning operation (based on a block 4Mx4N before partitioning, partition depth is increased by 1) is a flag indicating whether or not partitioning is performed (in this example, partitioning not performed when the flag is 0, partitioning performed when the flag is 1), and obtainable candidates may be 4Mx4N and 2Mx2N.

(No. 2, upper right block, A7 to A11)

This example is the case where partitioning of a multi-tree scheme (quad tree and binary tree in this example) is supported, and a size and a shape of a block that can be obtained through a plurality of block partition settings may be determined. In this example, it is presumed that in the case of the binary tree, the maximum encoding block is 64x64, the minimum encoding block has a length of 4, and the maximum partition depth is 4.

Since this example is the case where two or more blocks are obtainable (two or four in this example), partition information required for one partitioning operation (quad tree, partition depth is increased by 1) may be a flag indicating whether partitioning is performed, a flag indicating a partition type, a flag indicating a partition shape, and a flag indicating a partition direction, and obtainable candidates may be 4Mx4N, 4Mx2N, 2Mx4N, 4MxN/4Mx3N, 4Mx3N/4MxN, Mx4N/3Mx4N, and 3Mx4N/Mx4N.

When quad tree and binary tree partition ranges overlap each other (that is, in a range where both quad tree partitioning and binary tree partitioning can be performed in a current stage), and a current block (in a state before partitioning) is a block obtained by quad tree partitioning (a block obtained by quad tree partitioning from a parent block <when the partition depth is 1 less than the current one>), partition information can be divided into the following cases and configured. That is, when a block supported according to each partition setting can be obtained by a plurality of partitioning methods, partition information may be generated by classification into the following processes.

(1) When quad tree partitioning and binary tree partitioning overlap each other

[Table 1]

|  | a | b | c | d | e |
|---|---|---|---|---|---|
| QT | 1 |  |  |  |  |
| No Spli t | 0 | 0 |  |  |  |
| SBT hor | 0 | 1 | 0 | 0 |  |
| ABT hor 1/4 | 0 | 1 | 0 | 1 | 0 |

(continued)

|  | a | b | c | d | e |
|---|---|---|---|---|---|
| ABT hor 3/4 | 0 | 1 | 0 | 1 | 1 |
| SBT ver | 0 | 1 | 1 | 0 |  |
| ABT ver | 0 | 1 | 1 | 1 | 0 |
| ABT ver 3/4 | 0 | 1 | 1 | 1 | 1 |

In the above table, "a" denotes a flag indicating whether quad tree partitioning is performed, and when the flag is 1, quad tree partitioning (QT) is performed. When the flag is 0, "b", which is a flag indicating whether binary tree partitioning is performed, is checked. When b is 0, no further partitioning is performed in the block (No Split), and when b is 1, binary tree partitioning is performed.

"c" denotes a flag indicating a partition direction. c = 0 means horizontal partitioning (hor), and c = 1 means vertical partitioning (ver). "d" denotes a flag indicating a partition shape. d = 0 means symmetric partitioning (SBT: symmetric binary tree), and d = 1 means asymmetric partitioning (ABT: asymmetric binary tree). Only when d is 1, information about a detailed partitioning ratio (1/4 or 3/4) in asymmetric partitioning is checked. When d is 0, in left/right or upper/lower blocks, a ratio of the left block to the upper block is 1/4, and a ratio of the right block to the lower block is 3/4. When d is 1, a ratio is the opposite thereof.

(2) When only binary tree partitioning can be performed

In the above table, partition information can be expressed using the flags "b" to "e" except for the flag "a".

The case of a block A7 in FIG. 5 is the case where quad tree partitioning can be performed in blocks before partitioning (A7 to A11) (that is, even though quad tree partitioning can be performed, binary tree partitioning is performed instead of quad tree partitioning), and thus corresponds to the case where partition information in item (1) is generated.

On the other hand, the case of blocks A8 to A11 corresponds to the case where binary tree partitioning is performed without previously performing quad tree partitioning in the blocks A8 to A11 before partitioning (that is, quad tree partitioning is no longer possible in the corresponding blocks <A8 to A11>), and thus corresponds to the case where partition information in item (2) is generated.

(No. 3, lower left block, A12 to A15)

This example is the case where partitioning of the multi-tree scheme (quad tree, binary tree, and ternary tree in this example) is supported, and a size and a shape of a block that can be obtained through a plurality of block partition settings may be determined. In this example, it is presumed that in the case of the binary tree/ternary tree, the maximum encoding block is 64x64, the minimum encoding block has a length of 4, and the maximum partition depth is 4.

Since this example is the case where two or more blocks are obtainable (two, three, and four in this example), partition information required for one partitioning operation may be a flag indicating whether partitioning is performed, a flag indicating a partition type, and a flag indicating a partition direction, and obtainable candidates may be 4Mx4N, 4Mx2N, 2Mx4N, 4MxN/4Mx2N/4MxN, and Mx4N/2Mx4N/Mx4N.

When quad tree and binary tree/ternary tree partitioning ranges overlap each other, and a current block is a block obtained by quad tree partitioning, partition information may be divided into the following cases and configured.

(1) When quad tree partitioning and binary tree/ternary tree partitioning overlap each other

[Table 2]

|  | a | b | c | d |
|---|---|---|---|---|
| QT | 1 |  |  |  |
| No Split | 0 | 0 |  |  |
| BT hor | 0 | 1 | 0 | 0 |
| TT hor | 0 | 1 | 0 | 1 |

(continued)

|  | a | b | c | d |
|---|---|---|---|---|
| Bt ver | 0 | 1 | 1 | 0 |
| TT ver | 0 | 1 | 1 | 1 |

In the above table, "a" denotes a flag indicating whether quad tree partitioning is performed, and when the flag is 1, quad tree partitioning is performed. When the flag is 0, "b", which is a flag indicating whether binary tree or ternary tree partitioning is performed, is checked. When b is 0, no further partitioning is performed in the block, and when b is 1, binary tree or ternary tree partitioning is performed.

"c" denotes a flag indicating a partition direction. c = 0 means horizontal partitioning, and c = 1 means vertical partitioning. "d" denotes a flag indicating a partition type. d = 0 means binary tree partitioning (BT), and d = 1 means ternary tree partitioning (TT).

(2) When only binary tree/ternary tree partitioning can be performed

In the above table, partition information can be expressed using the flags "b" to "d" except for the flag "a".

In FIG. 5, the case of the blocks A12 and A15 is the case where quad tree partitioning can be performed in the blocks A12 and A15 before partitioning, and thus corresponds to the case where partition information in item (1) is generated.

On the other hand, the case of blocks A13 and A14 corresponds to the case where ternary tree partitioning is performed without previously performing quad tree partitioning in the blocks A13 and A14 before partitioning, and thus corresponds to the case where partition information in item (2) is generated.

(No. 4, lower left block, A16 to A20)

This example is the case where partitioning of the multi-tree scheme (quad tree, binary tree, and ternary tree in this example) is supported, and a size and a shape of a block that can be obtained through a plurality of block partition settings may be determined. In this example, it is presumed that in the case of the binary tree/ternary tree, the maximum encoding block is 64x64, the minimum encoding block has a length of 4, and the maximum partition depth is 4.

Since this example is the case where two or more blocks are obtainable (two, three, and four in this example) by partitioning, partition information required for one partitioning operation may be a flag indicating whether partitioning is performed, a flag indicating a partition type, a flag indicating a partition shape, and a flag indicating a partition direction, and obtainable candidates may be 4Mx4N, 4Mx2N, 2Mx4N, 4MxN/4Mx3N, 4Mx3N/4MxN, Mx4N/3Mx4N, 3Mx4N/Mx4N, 4MxN/4Mx2N/4MxN, and Mx4N/2Mx4N/Mx4N.

When quad tree and binary tree/ternary tree partitioning ranges overlap each other, and a current block is a block obtained by quad tree partitioning, partition information may be divided into the following cases and configured.

(1) When quad tree partitioning and binary tree/ternary tree partitioning overlap each other

[Table 3]

|  | a | b | c | d | e | f |
|---|---|---|---|---|---|---|
| QT | 1 |  |  |  |  |  |
| No Split | 0 | 0 |  |  |  |  |
| TT hor | 0 | 1 | 0 | 0 |  |  |
| SBT hor | 0 | 1 | 0 | 1 | 0 |  |
| ABT hor 1/4 | 0 | 1 | 0 | 1 | 1 | 0 |
| ABT hor 3/4 | 0 | 1 | 0 | 1 | 1 | 1 |
| TT ver | 0 | 1 | 1 | 0 |  |  |
| SBT ver | 0 | 1 | 1 | 1 | 0 |  |

(continued)

|  | a | b | c | d | e | f |
|---|---|---|---|---|---|---|
| ABT ver 1/4 | 0 | 1 | 1 | 1 | 1 | 0 |
| ABT ver 3/4 | 0 | 1 | 1 | 1 | 1 | 1 |

In the above table, "a" denotes a flag indicating whether quad tree partitioning is performed, and when the flag is 1, quad tree partitioning is performed. When the flag is 0, "b", which is a flag indicating whether binary tree partitioning is performed, is checked. When b is 0, no further partitioning is performed in the block, and when b is 1, binary tree or ternary tree partitioning is performed.

"c" denotes a flag indicating a partition direction. c = 0 means horizontal partitioning, and c = 1 means vertical partitioning. "d" denotes a flag indicating a partition type. d = 0 means ternary partitioning, and d = 1 means binary tree partitioning. When d is 1, e, which is a flag for the partition shape, is checked. When e is 0, symmetric partitioning is performed, and when e is 1, asymmetric partitioning is performed. When e is 1, information about a detailed partitioning ratio in asymmetric partitioning is checked, which is the same as in the previous example.

(2) When only binary tree/ternary tree partitioning can be performed

In the above table, partition information can be expressed using the flags "b" to "f" except for the flag "a".

In FIG. 5, the case of a block A20 is the case where quad tree partitioning can be performed in the blocks A16 to A19 before partitioning, and thus corresponds to the case where partition information in item (1) is generated.

On the other hand, the case of blocks A16 to A19 corresponds to the case where binary tree partitioning is performed without previously performing quad tree partitioning in the blocks A16 to A19 before partitioning, and thus corresponds to the case where partition information in item (2) is generated.

Hereinafter, an inter-prediction method based on a merge mode will be examined. In the merge mode, motion information may be derived in units of one block. Here, a block may refer to a coding block determined through the aforementioned block partitioning. In addition, the block is a coding block of a leaf node, and may refer to a block that is no longer partitioned into smaller coding blocks. In the merge mode, motion information may be derived in units of sub-blocks belonging to one block. To this end, one block may be additionally partitioned into a plurality of sub-blocks. For example, affine motion modeling may be performed based on the merge mode in units of sub-blocks. The current block may selectively use either a block-based merge mode or a sub-block-based merge mode, and a predetermined flag may be used to this end. Here, a flag may be information indicating whether the sub-block-based merge mode is applied. The flag may be encoded and signaled by the encoding apparatus based on a predetermined encoding parameter, or may be derived by the decoding apparatus. The encoding parameter may mean a block size/shape, a component type, a partitioning type, a partition depth, etc. For example, when the size of the current block is greater than or equal to NxM, the flag may be signaled. Otherwise, the flag may be derived as a pre-defined value. Here, N and M may be an integer of 8, 16, or more. N and M may be the same or different. The block-based merge mode will be described with reference to FIG. 6, and the sub-block-based merge mode will be described with reference to FIGS. 7 to 10, respectively.

FIG. 6 illustrates a method of performing inter-prediction based on a block-based merge mode as an embodiment to which the present invention is applied.

Referring to FIG. 6, a merge candidate list of a current block may be constructed (S600).

The merge candidate list may include at least one of a spatial merge candidate or a temporal merge candidate of the current block.

Motion information of the spatial merge candidate may be derived from motion information of a spatial neighboring block of the current block. Here, the spatial neighboring block is a block belonging to the same picture as that of the current block, and may mean a block adjacent to the current block. The spatial neighboring block may include at least one of a left, upper, upper right, lower left, or upper left neighboring block of the current block. The upper left neighboring block may be used only when at least one of blocks adjacent to the left, upper, upper right, and lower left blocks is not available.

Motion information of the temporal merge candidate may be derived from motion information of a temporal neighboring block of the current block. The temporal neighboring block is a block belonging to a picture different from that of the current block, and may be defined as a block at the same position as that of the current block. Here, the block at the same position may refer to at least one of a block BR adjacent to a lower right corner of the current block, a block CTR including a position of a center sample of the current block, or a block TL including a position of an upper left sample of the current block. Alternatively, the block at the same position may refer to a block including a position shifted by a predetermined disparity vector from the position of the upper left sample of the current block. Here, the disparity vector may be determined based on any one of motion vectors of the spatial neighboring block described above. Alternatively, the disparity vector may be determined based on a combination of at least two of the motion vectors of the spatial neighboring blocks described above. The combination may refer to a computation such as a maximum value, a minimum value, a median value, and a weighted average value. For example, the disparity vector may be set as a motion vector of a left neighboring block or an upper neighboring block. Alternatively, the disparity vector may be set as a median value or an average value between the motion vector of the left neighboring block and the motion vector of the lower left neighboring block.

A motion vector and a reference picture index of the temporal merge candidate may be derived as a motion vector and a reference picture index of the above-described temporal neighboring block, respectively. Alternatively, the motion vector of the temporal merge candidate may be derived as the motion vector of the temporal neighboring block, and the reference picture index of the temporal merge candidate may be set to a default value (for example, 0) pre-committed to the decoding apparatus regardless of the temporal neighboring block.

The merge candidate list may further include a combined merge candidate. The combined merge candidate may be derived by combining n merge candidates belonging to a pre-generated merge candidate list.

Here, n may be an integer of 2, 3, 4 or more. The number n of merge candidates to be combined may be a fixed value pre-committed to the encoding/decoding apparatus, or may be encoded and signaled by the encoding apparatus. The signaling may be performed in at least one unit of a sequence, a picture, a slice, a tile, a sub-tile (brick), or a predetermined block. The number n of merge candidates to be combined may be variably determined based on the number of remaining merge candidates. Here, the number of remaining merge candidates may mean a difference between the maximum number of merge candidates that can be included in the merge candidate list and the current number of merge candidates belonging to the merge candidate list. The maximum number may be a number pre-committed to the encoding/decoding apparatus, or may be encoded and signaled by the encoding apparatus. The current number may mean the number of merge candidates configured before adding the combined merge candidate. For example, when the number of remaining merge candidates is 1, two merge candidates may be used, and when the number of remaining merge candidates is greater than 1, three or more merge candidates may be used.

Positions of the n merge candidates may be positions pre-determined in the merge candidate list. For example, indices (0 to (k-1)) may be allocated to each merge candidate belonging to the merge candidate list. Here, k may mean the total number of merge candidates belonging to the merge candidate list. In this instance, the positions of the n merge candidates may correspond to index 0 to index (n-1) in the merge candidate list. Alternatively, the n merge candidates may be determined in consideration of a prediction direction of each merge candidate belonging to the merge candidate list. For example, among the merge candidates belonging to the merge candidate list, only a merge candidate corresponding to bi-directional prediction may be selectively used, or only a merge candidate corresponding to unidirectional prediction may be selectively used.

The combined merge candidate may be derived using both a spatial merge candidate and a temporal merge candidate, or may be derived using only either a spatial merge candidate or a temporal merge candidate. For example, the combined merge candidate may be limited to be derived using only the spatial merge candidate. In this case, the number of merge candidates to be combined may be limited within the number of spatial merge candidates belonging to the pre-generated merge candidate list.

The combined merge candidate may be added after the spatial/temporal merge candidate in the merge candidate list. That is, the index of the combined merge candidate may be larger than the index of the spatial/temporal merge candidate. Alternatively, the combined merge candidate may be added between the spatial merge candidate and the temporal merge candidate in the merge candidate list. That is, the index of the combined merge candidate may be larger than the index of the spatial merge candidate and smaller than the index of the temporal merge candidate. Alternatively, the position of the combined merge candidate may be variably determined in consideration of the prediction direction of the combined merge candidate. The positions of the combined merge candidates in the merge candidate list may be rearranged depending on whether the prediction direction of the combined merge candidate is bidirectional prediction. For example, when the combined merge candidate is bidirectional prediction, an index smaller than that of the spatial or temporal merge candidate may be allocated, and otherwise, an index larger than that of the spatial or temporal merge candidate may be allocated.

Hereinafter, for convenience of description, a method of deriving a combined merge candidate based on two merge candidates will be described.

Motion information of the combined merge candidate may be derived by a weighted average of motion information of a first merge candidate and motion information of a second merge candidate. Here, the weight of the weighted average is [1:1], [1:2], [1:3], [2:3], etc., and is not limited thereto. The weight may be pre-defined in the encoding/decoding apparatus or derived from the decoding apparatus. In this instance, the weight may be derived by considering at least one of a distance between a current picture and a reference picture of the merge candidate or a prediction direction of the merge candidate. Alternatively, the motion information of the combined merge candidate may be derived by obtaining motion information in a direction L0 from the first merge candidate and motion information in a direction L1 from the second merge candidate, and combining the motion information in the direction L0 and the motion information in the direction L1. The motion information of the combined merge candidate may be derived based on at least one of the above-described derivation methods, and the derivation may be performed in consideration of the prediction direction of the merge candidate to be combined, as described later.

In this specification, the motion information may include at least one of a prediction direction flag, a reference picture index, or a motion vector. The motion information may be defined for prediction L0 and prediction LI, respectively. Here, prediction L0 may refer to prediction referring to a reference picture list L0, and prediction LI may refer to prediction referring to a reference picture list L1.

1. When both first merge candidate and second merge candidate are unidirectional predictions

(CASE 1) When the first merge candidate is prediction L0 and the second merge candidate is prediction LI, a reference picture index of the combined merge candidate in the direction L0 may be derived as a reference picture index of the first merge candidate. A prediction direction flag of the combined merge candidate in the direction L0 may be derived as 1. A motion vector of the combined merge candidate in the direction L0 may be derived as a motion vector of the first merge candidate. A reference picture index of the combined merge candidate in the direction L1 may be derived as a reference picture index of the second merge candidate. A prediction direction flag of the combined merge candidate in the direction L1 may be derived as 1. A motion vector of the combined merge candidate in the direction L1 may be derived as a motion vector of the second merge candidate.

(CASE 2) When the first merge candidate is prediction L1 and the second merge candidate is prediction L0, a reference picture index of the combined merge candidate in the direction L0 may be derived as a reference picture index of the second merge candidate. A prediction direction flag of the combined merge candidate in the direction L0 may be derived as 1. A motion vector of the combined merge candidate in the direction L0 may be derived as a motion vector of the second merge candidate. A reference picture index of the combined merge candidate in the direction L1 may be derived as a reference picture index of the first merge candidate. A prediction direction flag of the combined merge candidate in the direction L1 may be derived as 1. The motion vector of the combined merge candidate in the direction L1 may be derived as the motion vector of the first merge candidate.

(CASE 3) When the first merge candidate and the second merge candidate are prediction L0, a reference picture index of the combined merge candidate in the direction L0 may be derived as a reference picture index of any one of the first merge candidate and the second merge candidate. For example, the reference picture index of one of the first merge candidate and the second merge candidate having the smallest index may be set as the reference picture index of the combined merge candidate in the direction L0. A prediction direction flag of the combined merge candidate in the direction L0 may be derived as 1. A motion vector of the combined merge candidate in the direction L0 may be derived as a weighted average of the motion vector of the first merge candidate and the second merge candidate. A reference picture index of the combined merge candidate in the direction L1 may be derived as -1, a prediction direction flag in the direction LI may be derived as 0, and motion information in the direction L1 may be derived as 0.

(CASE 4) When the first merge candidate and the second merge candidate are prediction LI, a reference picture index of the combined merge candidate in the direction L0 may be derived as -1, a prediction direction flag in the direction L0 may be derived as 0, and motion information in the direction L0 may be derived as 0. A reference picture index of the combined merge candidate in the direction L1 may be derived as a reference picture index of either the first merge candidate or the second merge candidate. For example, a reference picture index of one of the first merge candidate and the second merge candidate having the smallest index may be set as the reference picture index of the combined merge candidate in the direction L1. A prediction direction flag of the combined merge candidate in the direction L1 may be derived as 1. A motion vector of the combined merge candidate in the direction L1 may be derived as a weighted average of the motion vector of the first merge candidate and the second merge candidate.

2. When both first merge candidate and second merge candidate are bidirectional predictions

(CASE 5) A reference picture index of the combined merge candidate in the direction L0 may be derived as a reference picture index of either the first merge candidate or the second merge candidate. For example, a reference picture index of one of the first merge candidate and the second merge candidate having the smallest index may be set as a reference picture index of the combined merge candidate in the direction L0. A prediction direction flag of the combined merge candidate in the direction L0 may be derived as 1. A motion vector of the combined merge candidate in the direction L0 may be derived as a weighted average of the motion vector of the first merge candidate and the second merge candidate. A reference picture index of the combined merge candidate in the direction L1 may be derived as a reference picture index of either the first merge candidate or the second merge candidate. For example, the reference picture index of one of the first merge candidate and the second merge candidate having the smallest index may be set as the reference picture index of the combined merge candidate in the direction L1. A prediction direction flag of the combined merge candidate in the direction L1 may be derived as 1. A motion vector of the combined merge candidate in the direction L1 may be derived as a weighted average of the motion vector of the first merge candidate and the second merge candidate.

3. When first merge candidate is bidirectional prediction and second merge candidate is unidirectional prediction

(CASE 6) When the second merge candidate is prediction L0, a reference picture index of the combined merge candidate in the direction L0 may be derived as a reference picture index of either the first merge candidate or the second merge candidate. For example, a reference picture index of one of the first merge candidate and the second merge candidate having the smallest index may be set as a reference picture index of the combined merge candidate in the direction L0. A prediction direction flag of the combined merge candidate in the direction L0 may be derived as 1. A motion vector of the combined merge candidate in the direction L0 may be derived as a weighted average of the motion vector of the first merge candidate and the second merge candidate. A reference picture index of the combined merge candidate in the direction L1 may be derived as a reference picture index of the first merge candidate. A prediction direction flag of the combined merge candidate in the direction L1 may be derived as 1. A motion vector of the combined merge candidate in the direction L1 may be derived as the motion vector of the first merge candidate.

(CASE 7) When the second merge candidate is prediction LI, a reference picture index of the combined merge candidate in the direction L0 may be derived as the reference picture index of the first merge candidate. A prediction direction flag of the combined merge candidate in the direction L0 may be derived as 1. A motion vector of the combined merge candidate in the direction L0 may be derived as a motion vector of the first merge candidate. A reference picture index of the combined merge candidate in the direction L1 may be derived as a reference picture index of either the first merge candidate or the second merge candidate. For example, a reference picture index of one of the first merge candidate and the second merge candidate having the smallest index may be set as the reference picture index of the combined merge candidate in the direction L1. A prediction direction flag of the combined merge candidate in the direction L1 may be derived as 1. A motion vector of the combined merge candidate in the direction L1 may be derived as a weighted average of the motion vector of the first merge candidate and the second merge candidate.

Referring to FIG. 6, motion information of a current block may be derived from a merge candidate list (S610).
Specifically, a merge index of the current block may be signaled. The merge index may specify any one of a plurality of merge candidates belonging to the merge candidate list. That is, a merge candidate having the same index as the merge index may be extracted, and motion information of the current block may be derived using motion information of the extracted merge candidate.
Referring to FIG. 6, inter-prediction of the current block may be performed using the derived motion information (S620).
Specifically, a reference picture may be selected from the reference picture list based on the reference picture index of the current block. A reference block within the reference picture may be specified based on the motion vector of the current block. A prediction pixel of the current block may be generated using a reconstructed pixel of the specified reference block. The current block may be reconstructed by adding the prediction pixel of the current block and a residual pixel. Here, the residual pixel may be derived by performing at least one of inverse quantization or inverse transformation on a residual coefficient signaled through a bitstream.
FIG. 7 illustrates an inter-prediction method based on an affine model as an embodiment to which the present invention is applied.
Referring to FIG. 7, a candidate list for predicting motion information of a current block may be generated (S700).
The candidate list may include one or more affine model-based candidates (hereinafter referred to as affine candidates). The affine candidate may refer to a candidate having a control point vector. The control point vector refers to a motion vector of a control point for the affine model, and may be defined for a corner position of a block (for example, at least one position among an upper left corner, an upper right corner, a lower left corner, or a lower right corner).

The affine candidate may include at least one of a spatial candidate, a temporal candidate, or a configured candidate. Here, the spatial candidate may be derived from a vector of a neighboring block spatially adjacent to the current block, and the temporal candidate may be derived from a vector of a neighboring block temporally adjacent to the current block. Here, the neighboring block may refer to a block encoded by the affine model. The vector may refer to a motion vector or a control point vector.

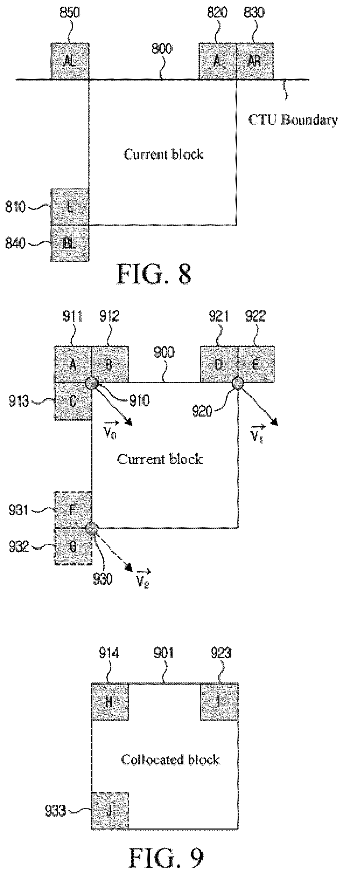

A method of deriving a spatial/temporal candidate based on a vector of a spatial/temporal neighboring block will be described in detail with reference to FIG. 8.

Meanwhile, the configured candidate may be derived based on a combination of motion vectors of spatial/temporal neighboring blocks with respect to the current block, which will be described in detail with reference to FIG. 9.

The plurality of affine candidates described above may be arranged in the candidate list based on a predetermined priority. For example, the plurality of affine candidates may be arranged in the candidate list in the order of a spatial candidate, a temporal candidate, and a configured candidate. Alternatively, the plurality of affine candidates may be arranged in the candidate list in the order of a temporal candidate, a spatial candidate, and a configured candidate. However, the present invention is not limited thereto, and the temporal candidate may be arranged after the configured candidate. Alternatively, some of the configured candidates may be arranged before the spatial candidate, and the rest may be arranged after the spatial candidate.

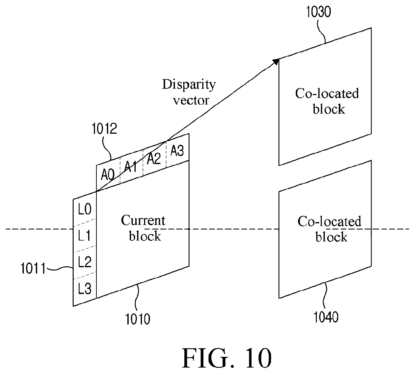

The candidate list may further include a sub-block-based temporal candidate. The motion information of the temporal candidate may be derived as a collocated block corresponding to the current block, which will be described in detail with reference to FIG. 10.

Based on the candidate list and a candidate index, a control point vector of the current block may be derived (S710).

The candidate index may refer to an index that is encoded to derive the control point vector of the current block. The candidate index may specify any one of a plurality of affine candidates belonging to the candidate list. The control point vector of the current block may be derived using a control point vector of the affine candidate specified by the candidate index.

For example, it is presumed that a type of the affine model of the current block is 4-parameter (that is, it is determined that the current block uses two control point vectors). In this instance, when the affine candidate specified by the candidate index has three control point vectors, only two control point vectors (for example, control point vectors whose Idx are 0 and 1) may be selected from among the three control point vectors, and set as control point vectors of the current block. Alternatively, the three control point vectors of the specified affine candidates may be set as the control point vectors of the current block. In this case, the type of the affine model of the current block may be updated to 6-parameter.

Conversely, it is presumed that the type of the affine model of the current block is 6-parameter (that is, it is determined that the current block uses three control point vectors). In this instance, when the affine candidate specified by the candidate index has two control point vectors, one additional control point vector can be generated, and the two control point vectors and the additional control point vector of the affine candidate can be set as the control point vectors of the current block. The additional control point vector may be derived based on at least one of the two control point vectors of the affine candidate, and size or position information of the current/neighboring block.

Alternatively, the two control point vectors of the specified affine candidates may be set as the control point vectors of the current block. In this case, the type of the affine model of the current block may be updated to 4-parameter.

The motion vector of the current block may be derived based on the control point vector of the current block (S720).

The motion vector may be derived in units of sub-blocks of the current block. To this end, the current block may be partitioned into a plurality of NxM sub-blocks. Here, the NxM sub-blocks may be in the form of a rectangle (N > M or N < M) or a square (N = M). The values of N and M may be 4, 8, 16, 32 or more.

For example, the size/shape of the sub-block may be a fixed size/shape pre-defined in the decoding apparatus. For example, the size/shape of the sub-block may be a square such as 4x4, 8x8, or 16x16, or a rectangle such as 2x4, 2x8, 4x8, or 4x16. Alternatively, the sub-block may be defined as a block in which the sum of the width and height is 8, 12, 16 or more. Alternatively, the sub-block may be defined as a block in which the product of the width and the height is an integer of 16, 32, 64 or more.

Alternatively, the size/shape of the sub-block may be variably derived based on an attribute of the above-described block. For example, when the size of the current block is greater than or equal to a predetermined threshold size, the current block may be partitioned into units of the first sub-block (for example, 8x8 and 16x16), and otherwise, the current block may be partitioned into units of the second sub-block (for example, 4x4).

Alternatively, information about the size/shape of the sub-block may be encoded and signaled by the encoding apparatus. The information indicates at least one of the size or shape of the sub-block, which may be signaled at at least one level of a sequence, a picture, a tile group, a tile, and a CTU.

A control point representing the current block may include an upper left position and an upper right position. However, the present invention is not limited thereto, and the control point may include three points of an upper left position, an upper right position, and a lower left position, or may further include a plurality of additional points.

When two control points are used, a motion vector for each sub-block of the current block may be derived using at least one of the first control point vector corresponding to the first control point, the second control point vector corresponding to the second control point, and the position (x, y) of the sub-block or the size (width or height) of the current block.

When three control points are used, the motion vector for each sub-block of the current block may be derived using at least one of the first control point vector corresponding to the first control point, the second control point vector corresponding to the second control point, the third control point vector corresponding to the third control point, and the position (x, y) of the sub-block or the size (width or height) of the current block. In this instance, a difference vector between the second control point vector and the first control point vector may be used, and a difference vector between the third control point vector and the first control point vector may be used. The difference vector may be calculated for each of a horizontal direction (x-axis direction) and a vertical direction (y-axis direction).

The motion vector derivation process may further include a process of applying a predetermined offset to the motion vector derived based on the control point vector. The offset may refer to a vector for improving a pre-derived motion vector. The offset may be determined based on information about at least one of the size or direction of the offset. The size (absolute) may be an integer of 1, 2, 3, or more. The direction may include at least one of a left direction, a right direction, an upper direction, or a lower direction. Information about the size and/or direction of the offset may be encoded and signaled by the encoding apparatus. Alternatively, the size of the offset may be a fixed value preset in the decoding apparatus.

Inter-prediction may be performed on the current block using the derived motion vector (S730).

Specifically, a reference block can be specified using the motion vector of the current block. The reference block may be specified for each sub-block of the current block. The reference block of each sub-block may belong to one reference picture. That is, sub-blocks belonging to the current block can share one reference picture. Alternatively, a reference picture index may be independently set for each sub-block of the current block.

Meanwhile, the derived motion vector may include at least one of a motion vector L0 and a motion vector L1. When the motion vector includes the motion vectors L0 and L1, the decoding apparatus may perform unidirectional prediction by setting any one of the motion vectors L0 and L1 to 0.

The setting may be selectively performed in consideration of at least one of a block size or a prediction mode. Here, the block may refer to a current block or a sub-block of the current block. The prediction mode may refer to a skip mode, a merge mode, an AMVP mode, an affine model-based prediction mode, a current picture reference mode, etc.

For example, when the size of the current block (or a sub-block of the current block) is less than or equal to a predetermined threshold size, unidirectional prediction is performed by setting the motion vector L1 to 0, and otherwise, bidirectional prediction can be performed using the motion vectors L0 and L1. Here, the threshold size may be defined as a block size in which at least one of the width and height is 4, 8, or 16.

Alternatively, when the current block is encoded in the first prediction mode, unidirectional prediction is performed by setting the motion vector L1 to 0, and otherwise, bidirectional prediction may be performed using the motion vectors L0 and L1.

The specified reference block may be set as a prediction block of the current block. The current block may be reconstructed by adding a residual block to the prediction block.

FIG. 8 relates to a method of deriving an affine candidate from a control point vector of a spatial/temporal neighboring block as an embodiment to which the present invention is applied.

A width and a height of a current block 800 are cbW and cbH, respectively, and a position of the current block is (xCb, yCb). A width and a height of spatial neighboring blocks 810-850 are nbW and nbH, respectively, and positions of the spatial neighboring blocks are (xNb, yNb). The spatial neighboring block may include at least one of a left block 810, a lower left block 840, an upper right block 830, an upper block 820, or an upper left block 850 of the current block. Alternatively, the spatial neighboring block may further include at least one of a block adjacent to the right or a block adjacent to the lower side of the upper left block 850.

The spatial candidate may have n control point vectors (cpMV). Here, a value of n may be an integer of 1, 2, 3, or more. The value n is determined based on at least one of information about whether decoding is performed in units of sub-blocks, information about whether a block is encoded by the affine model, or information about a type (4-parameter or 6-parameter) of the affine model.

For example, according to the information, when a corresponding block is a block decoded in units of sub-blocks or encoded by the affine model, the corresponding block may have two control point vectors. On the other hand, otherwise, the corresponding block may not be subjected to prediction based on the affine model.

Alternatively, according to the information, when the corresponding block is a block encoded by the affine model and the type of the affine model is 6-parameter, the corresponding block may have three control point vectors. On the other hand, otherwise, the corresponding block may be subjected to prediction based on the affine model.

The above-described information may be encoded and signaled by the encoding apparatus. Alternatively, all or part of the information may be derived from the decoding apparatus based on the attribute of the block. Here, the block may refer to a current block or refer to a spatial/temporal neighboring block of the current block. The attribute may refer to parameters related to a size, a shape, a position, a partitioning type, an inter mode, a residual coefficient, etc. The inter mode is a mode pre-defined in the decoding apparatus and may refer to a merge mode, a skip mode, an AMVP mode, an affine model, an intra/inter combination mode, a current picture reference mode, etc. Alternatively, the value n may be derived from the decoding apparatus based on the above-described block attribute.

In the present embodiment, the n control point vectors may be expressed as a first control point vector (cpMV[0]), a second control point vector (cpMV[1]), a third control point vector (cpMV[2]), and an nth control point vector (cpMV[n-1]).

As an example, the first control point vector (cpMV[0]), the second control point vector (cpMV[1]), the third control point vector (cpMV[2]), and the fourth control point vector (cpMV[3]) may be vectors corresponding to positions of an upper left sample, an upper right sample, a lower left sample, and a lower right sample of the block. Here, it is presumed that the spatial candidate has three control point vectors, and the three control point vectors may be arbitrary control point vectors selected from the first to nth control point vectors. However, the present invention is not limited thereto, and the spatial candidate may have two control point vectors, and the two control point vectors may be arbitrary control point vectors selected from the first to nth control point vectors.

Hereinafter, a method of deriving a control point vector of a spatial candidate will be described.

1. When boundary of current block does not touch CTU boundary

The first control point vector can be derived based on at least one of a first control point vector of a spatial neighboring block, a predetermined difference value, and position information (xCb, yCb) of a current block or position information (xNb, yNb) of a spatial neighboring block.

The number of difference values may be 1, 2, 3 or more. The number of difference values may be variably determined in consideration of the attribute of the above-described block, or may be a fixed value pre-committed to the decoding apparatus. The difference value may be defined as a difference value between one of a plurality of control point vectors and another one. For example, the difference value may include at least one of a first difference value between the second control point vector and the first control point vector, a second difference value between the third control point vector and the first control point vector, a third difference value between the fourth control point vector and the third control point vector, or a fourth difference value between the fourth control point vector and the second control point vector.

For example, the first control point vector may be derived as in Equation 1 below.

[Equation 1]

$$cpMvLX[0][0] = (mvScaleHor + dHorX*(xCb - xNb) + dHorY*(yCb - yNb))$$

$$cpMvLX[0][1] = (mvScaleVer + dVerX*(xCb - xNb) + dVerY*(yCb - yNb))$$

In Equation 1, the variables mvScaleHor and mvScaleVer may refer to a first control point vector of a spatial neighboring block, or a value derived by applying a shift computation by k to the first control point vector. Here, k may be an integer of 1, 2, 3, 4, 5, 6, 7, 8, 9 or more. The variables dHorX and dVerX correspond to an x-component and a y-component of the first difference value between the second control point vector and the first control point vector, respectively. The variables dHorY and dVerY correspond to an x-component and a y-component of the second difference value between the third control point vector and the first control point vector, respectively. The above-described variables can be derived as in Equation 2 below.

[Equation 2]

$$mvScaleHor = CpMvLX[xNb][yNb][0][0] << 7$$

$$mvScaleVer = CpMvLX[xNb][yNb][0][1] << 7$$

$$dHorX = (CpMvLX[xNb + nNbW - 1][yNb][1][0] - CpMvLX[xNb][yNb][0][0]) << (7 - log2NbW)$$

$$dVerX = (CpMvLX[xNb + nNbW - 1][yNb][1][1] - CpMvLX[xNb][yNb][0][1]) << (7 - log2NbW)$$

$$dHorY = (CpMvLX[xNb][yNb + nNbH - 1][2][0] - CpMvLX[xNb][yNb][2][0]) << (7 - log2NbH)$$

$$dVerY = (CpMvLX[xNb][yNb + nNbH - 1][2][1] - CpMvLX[xNb][yNb][2][1]) << (7 - log2NbH)$$

The second control point vector may be derived based on at least one of a first control point vector of a spatial neighboring block, a predetermined difference value, position information (xCb, yCb) of the current block, a block size (width or height), or position information (xNb, yNb) of a spatial neighboring block. Here, the block size may refer to the size of the current block and/or the size of the spatial neighboring block. The difference value is the same as that in the description of the first control point vector, and thus a detailed description thereof will be omitted. However, the range and/or the number of difference values used in a process of deriving the second control point vector may be different from those of the first control point vector.

For example, the second control point vector can be derived as in Equation 3 below.

[Equation 3]

$$cpMvLX[1][0] = (mvScaleHor + dHorX*(xCb + cbWidth - xNb) + dHorY*(yCb - yNb))$$

$$cpMvLX[1][1] = (mvScaleVer + dVerX*(xCb + cbWidth - xNb) + dVerY*(yCb - yNb))$$

In Equation 3, the variables mvScaleHor, mvScaleVer, dHorX, dVerX, dHorY, and dVerY are as described in Equation 1, and thus a detailed description thereof will be omitted.

The third control point vector may be derived based on at least one of a first control point vector of a spatial neighboring block, a predetermined difference value, position information (xCb, yCb) of the current block, a block size (width or height), or position information (xNb, yNb) of a spatial neighboring block. Here, the block size may refer to the size of the current block and/or the spatial neighboring block. The difference value is the same as that in the description of the first control point vector, and thus a detailed description thereof will be omitted. However, the range and/or the number of difference values used in a process of deriving the third control point vector may be different from those of the first control point vector or the second control point vector.

For example, the third control point vector can be derived as in Equation 4 below.

[Equation 4]

$$cpMvLX[2][0] = (mvScaleHor + dHorX*(xCb - xNb) + dHorY*(yCb + cbHeight - yNb))$$

$$cpMvLX[2][1] = (mvScaleVer + dVerX*(xCb - xNb) + dVerY*(yCb + cbHeight - yNb))$$

In Equation 4, the variables mvScaleHor, mvScaleVer, dHorX, dVerX, dHorY, and dVerY are as described in Equation 1, and thus a detailed description thereof will be omitted. Meanwhile, through the above-described process, an nth control point vector of a spatial candidate may be derived.

2. When boundary of current block touches CTU boundary

The first control point vector can be derived based on at least one of a motion vector (MV) of a spatial neighboring block, a predetermined difference value, position information (xCb, yCb) of a current block, or position information (xNb, yNb) of a spatial neighboring block.

The motion vector may be a motion vector of a sub-block located at the lowermost side of the spatial neighboring block. The sub-block may be a sub-block located at the leftmost, center, or rightmost among a plurality of sub-blocks located at the lowermost side of the spatial neighboring block. Alternatively, the motion vector may mean an average value, a maximum value, or a minimum value of motion vectors of the sub-block.

The number of difference values may be 1, 2, 3 or more. The number of difference values may be variably determined in consideration of the attribute of the above-described block, or may be a fixed value pre-committed to the decoding apparatus. The difference value may be defined as a difference value between one of a plurality of motion vectors stored in units of sub-blocks in a spatial neighboring block and another one. For example, the difference value may refer to a difference value between a motion vector of a lower right sub-block and a motion vector of a lower left sub-block of the spatial neighboring block.

For example, the first control point vector can be derived as in Equation 5 below.

$$[\text{Equation } 5]$$

$$cpMvLX[0][0] = (mvScaleHor + dHorX*(xCb - xNb) + dHorY*(yCb - yNb))$$

$$cpMvLX[0][1] = (mvScaleVer + dVerX*(xCb - xNb) + dVerY*(yCb - yNb))$$

In Equation 5, the variables mvScaleHor and mvScaleVer may refer to a motion vector (MV) of the above-described spatial neighboring block or a value derived by applying a shift computation by k to the motion vector. Here, k may be an integer of 1, 2, 3, 4, 5, 6, 7, 8, 9 or more.

The variables dHorX and dVerX correspond to an x-component and a y-component of a predetermined difference value, respectively. Here, the difference value refers to a difference value between the motion vector of the lower right sub-block and the motion vector of the lower left sub-block in the spatial neighboring block. The variables dHorY and dVerY may be derived based on the variables dHorX and dVerX. The above-described variables can be derived as in Equation 6 below.

$$[\text{Equation } 6]$$

$$mvScaleHor = MvLX[xNb][yNb + nNbH - 1][0] << 7$$

$$mvScaleVer = MvLX[xNb][yNb + nNbH - 1][1] << 7$$

$$dHorX = (MvLX[xNb + nNbW - 1][yNb + nNbH - 1][0] - MvLX[xNb][yNb + nNbH - 1][0]) << (7 - log2NbW)$$

$$dVerX = (MvLX[xNb + nNbW - 1][yNb + nNbH - 1][1] - MvLX[xNb][yNb + nNbH - 1][1]) << (7 - log2NbW)$$

$$dHorY = -dVerX$$

$$dVerY = dHorX$$

The second control point vector may be derived based on at least one of a motion vector (MV) of a spatial neighboring block, a predetermined difference value, position information (xCb, yCb) of a current block, a block size (width or height), or position information (xNb, yNb) of a spatial neighboring block. Here, the block size may refer to a size of the current block and/or the spatial neighboring block. The motion vector and the difference value are the same as those in the description of the first control point vector, and thus a detailed description thereof will be omitted. However, the position of the motion vector and the range and/or the number of the difference values used in a process of deriving the second control point vector may be different from those of the first control point vector.

For example, the second control point vector can be derived as in Equation 7 below.

[Equation 7]

$$cpMvLX[1][0] = (mvScaleHor + dHorX*(xCb + cbWidth - xNb) + dHorY*(yCb - yNb))$$

$$cpMvLX[1][1] = (mvScaleVer + dVerX*(xCb + cbWidth - xNb) + dVerY*(yCb - yNb))$$

In Equation 7, the variables mvScaleHor, mvScaleVer, dHorX, dVerX, dHorY, and dVerY are as described in Equation 5, and a detailed description thereof will be omitted.

The third control point vector may be derived based on at least one of a motion vector (MV) of a spatial neighboring block, a predetermined difference value, position information (xCb, yCb) of a current block, a block size (width or height), or position information (xNb, yNb) of a spatial neighboring block. Here, the block size may refer to a size of the current block and/or the spatial neighboring block. The motion vector and the difference value are the same as those in the description of the first control point vector, and thus a detailed description thereof will be omitted. However, the position of the motion vector and the range and/or the number of the difference values used in a process of deriving the third control point vector may be different from those of the first control point vector or the second control point vector.

For example, the third control point vector can be derived as in Equation 8 below.

[Equation 8]

$$cpMvLX[2][0] = (mvScaleHor + dHorX*(xCb - xNb) + dHorY*(yCb + cbHeight - yNb))$$

$$cpMvLX[2][1] = (mvScaleVer + dVerX*(xCb - xNb) + dVerY*(yCb + cbHeight - yNb))$$

In Equation 8, the variables mvScaleHor, mvScaleVer, dHorX, dVerX, dHorY, and dVerY are as described in Equation 5, and a detailed description thereof will be omitted. Meanwhile, through the above-described process, an nth control point vector of a spatial candidate may be derived.

The above-described process of deriving the affine candidate may be performed for each of the pre-defined spatial neighboring blocks. The pre-defined spatial neighboring blocks may include at least one of a left block, a lower left block, an upper right block, an upper block, or an upper left block of the current block.

Alternatively, the process of deriving the affine candidate may be performed for each group of the spatial neighboring blocks. Here, the spatial neighboring blocks may be classified into a first group including a left block and a lower left block, and a second group including an upper right block, an upper block, and an upper left block.

For example, one affine candidate may be derived from a spatial neighboring block belonging to the first group. The derivation may be performed until an available affine candidate is found based on a predetermined priority. The priority may be the order of the left block -> the lower left block, or the reverse order. According to the priority, it is determined whether the corresponding spatial neighboring block in the first group is a block decoded through affine model-based prediction, and the block first decoded by the affine model-based prediction may be selected as an affine candidate.

Similarly, one affine candidate may be derived from a spatial neighboring block belonging to the second group. The derivation may be performed until an available affine candidate is found based on a predetermined priority. The priority may be in the order of upper right block -> upper block -> upper left block, or the reverse order. According to the priority, it is determined whether the corresponding spatial neighboring block in the second group is a block decoded through affine model-based prediction, and the block first decoded by the affine model-based prediction may be selected as an affine candidate.

The above-described embodiment can be applied in the same/similar manner to a temporal neighboring block. Here, the temporal neighboring block belongs to a picture different from that of the current block, and may be a block at the same position as that of the current block. The block at the same position may be a block including a position of an upper left sample of the current block, a center position, or a position of a sample adjacent to a lower right sample of the current block.

Alternatively, the temporal neighboring block may mean a block at a position shifted by a predetermined disparity vector from the block at the same position. Here, the disparity vector may be determined based on a motion vector of any one of the spatial neighboring blocks of the current block described above.

FIG. 9 illustrates a method of deriving a configured candidate based on a combination of motion vectors of spatial/temporal neighboring blocks in an embodiment to which the present invention is applied.

The configured candidate of the present invention may be derived based on a combination of at least two of control point vectors (hereinafter referred to as control point vectors (cpMVCorner[n])) corresponding to each corner of a current block. Here, n may be 0, 1, 2, or 3.

The control point vector cPMVCorner[n] may be derived based on a motion vector of a spatial neighboring block and/or a temporal neighboring block. Here, the spatial neighboring block may include at least one of a first neighboring block A, B or C adjacent to the upper left sample of the current block, a second neighboring block D or E adjacent to the upper right sample of the current block, or a third neighboring block F or G adjacent to the lower left sample of the current block. The temporal neighboring block is a block belonging to a picture different from that of the current block, and may refer to a block at the same position as that of the current block (hereinafter, referred to as a fourth neighboring block Col). Here, the fourth neighboring block may refer to a block (H, I, or J) including a position of the upper left sample, the upper right sample, or the lower left sample of the current block, or a block adjacent to a position of the lower right sample of the current block.

The first neighboring block may refer to an upper left (A), upper (B), or left (C) neighboring block of the current block. It is determined whether motion vectors of the neighboring blocks A, B, and C are available according to a predetermined priority, and a control point vector may be determined using the available motion vectors of the neighboring blocks. The availability determination may be performed until a neighboring block having an available motion vector is found. Here, the priority may be in the order of A -> B -> C. However, the present invention is not limited thereto, and the order may be A -> C -> B, C -> A -> B, or B -> A -> C.

The second neighboring block may refer to an upper (D) or upper right (E) neighboring block of the current block. Similarly, it is possible to determine whether motion vectors of neighboring blocks D and E are available according to a predetermined priority, and determine a control point vector using the available motion vectors of the neighboring blocks. The availability determination may be performed until a neighboring block having an available motion vector is found. Here, the priority may be in the order of D -> E, or in the order of E -> D.

The third neighboring block may refer to a left (F) or lower left (G) neighboring block of the current block. Likewise, it is possible to determine whether a motion vector of the neighboring block is available according to a predetermined priority, and determine a control point vector using the available motion vector of the neighboring block. The availability determination may be performed until a neighboring block having an available motion vector is found. Here, the priority may be in the order of G -> F, or in the order of F -> G.

For example, a first control point vector (cpMVCorner[0]) may be set as a motion vector of a first neighboring block, a second control point vector (cpMVCorner[1]) may be set as a motion vector of a second neighboring block, and a third control point vector cpMVCorner[2] may be set as a motion vector of a third neighboring block. A fourth control point vector cpMVCorner[3] may be set as a motion vector of a fourth neighboring block.

Alternatively, the first control point vector may be derived using the motion vector of at least one of the first neighboring block or the fourth neighboring block, where the fourth neighboring block may be a block H including the position of the upper left sample. The second control point vector may be derived using a motion vector of at least one of the second neighboring block or the fourth neighboring block. Here, the fourth neighboring block may be a block I including a position of the upper right sample. The third control point vector may be derived using a motion vector of at least one of the third neighboring block or the fourth neighboring block. Here, the fourth neighboring block may be a block J including the position of the lower left sample.

Alternatively, any one of the first to fourth control point vectors may be derived based on another one. For example, the second control point vector may be derived by applying a predetermined offset vector to the first control point vector. The offset vector may be a difference vector between the third control point vector and the first control point vector, or may be derived by applying a predetermined scaling factor to the difference vector. The scaling factor may be determined based on at least one of a width or height of a current block and/or a neighboring block.

Through a combination of at least two of the first to fourth control point vectors described above, K configured candidates ConstK according to the present invention may be determined. A value of K may be an integer of 1, 2, 3, 4, 5, 6, 7 or more. The value of K may be derived based on information signaled by the encoding apparatus or may be a value pre-committed to the decoding apparatus. The information may include information indicating the maximum number of configured candidates included in the candidate list.

Specifically, the first configured candidate Const1 may be derived by combining the first to third control point vectors. For example, the first configured candidate Const1 may have a control point vector as shown in Table 4 below. Meanwhile, only when reference picture information of the first neighboring block is the same as reference picture information of the second and third neighboring blocks, the control point vector may be limited to be configured as shown in Table 4. Here, the reference picture information may refer to a reference picture index indicating a position of a corresponding reference picture in a reference picture list, or refer to a picture order count (POC) value indicating an output order.

[Table 4]

| Idx | Control point vector |
|-----|---------------------|
| 0 | cpMvCorner[0] |
| 1 | cpMvCorner[1] |
| 2 | cpMvCorner[2] |

The second configured candidate Const2 may be derived by combining the first, second, and fourth control point vectors. For example, the second configured candidate Const2 may have a control point vector as shown in Table 5 below. Meanwhile, only when the reference picture information of the first neighboring block is the same as the reference picture information of the second and fourth neighboring blocks, the control point vector may be limited to be configured as shown in Table 5. Here, the reference picture information is as described above.

[Table 5]

| Idx | Control point vector |
|-----|---------------------|
| 0 | cpMvCorner[0] |
| 1 | cpMvCorner[1] |
| 2 | cpMvCorner[3] + cpMvCorner[1] - cpMvCorner[0] |
| | cpMvCorner[3] + cpMvCorner[0] - cpMvCorner[1] |

The third configured candidate Const3 may be derived by combining the first, third and fourth control point vectors. For example, the third configured candidate Const3 may have a control point vector as shown in Table 6 below. Meanwhile, only when the reference picture information of the first neighboring block is the same as the reference picture information of the third and fourth neighboring blocks, the control point vector may be limited to be configured as shown in Table 6. Here, the reference picture information is as described above.

[Table 6]

| Idx | Control point vector | Control point vector |
|-----|---------------------|---------------------|
| 0 | cpMvCorner[0] | cpMvCorner[0] |
| 1 | cpMvCorner[3] + cpMvCorner[0] - cpMvCorner[2] | cpMvCorner[2] |
| 2 | cpMvCorner[2] | cpMvCorner[0] + cpMvCorner[3] - cpMvCorner[2] |

The fourth configured candidate Const4 may be derived by combining the second, third, and fourth control point vectors. For example, the fourth configured candidate Const4 may have a control point vector as shown in Table 7 below. Meanwhile, only when the reference picture information of the second neighboring block is the same as the reference picture information of the third and fourth neighboring blocks, the configuration may be limited as shown in Table 7. Here, the reference picture information is as described above.

[Table 7]

| Idx | Control point vector | Control point vector |
|-----|---------------------|---------------------|
| 0 | cpMvCorner[1] + cpMvCorner[2] - cpMvCorner[3] | cpMvCorner[2] |
| 1 | cpMvCorner[1] | cpMvCorner[3] |
| 2 | cpMvCorner[2] | cpMvCorner[3] + cpMvCorner[2] - cpMvCorner[1] |

The fifth configured candidate Const5 may be derived by combining the first and second control point vectors.

For example, the fifth configured candidate Const5 may have a control point vector as shown in Table 8 below. Meanwhile, only when the reference picture information of the first neighboring block is the same as the reference picture information of the second neighboring block, the control point vector may be limited to be configured as shown in Table 8. Here, the reference picture information is as described above.

[Table 8]

| Idx | Control point vector |
|-----|---------------------|
| 1 | cpMvCorner[0] |
| 2 | cpMvCorner[1] |

The sixth configured candidate Const6 may be derived by combining the first and third control point vectors. For example, the sixth configured candidate Const6 may have a control point vector as shown in Table 9 below. Meanwhile, only when the reference picture information of the first neighboring block is the same as the reference picture information of the third neighboring block, the control point vector may be limited to be configured as shown in Table 9. Here, the reference picture information is as described above.

[Table 9]

| Idx | Control point vector | Control point vector |
|-----|---------------------|---------------------|
| 1 | cpMvCorner[0] | cpMvCorner[0] |
| 2 | cpMvCorner[2] | cpMvCorner[1] |

In Table 9, cpMvCorner[1] may be a second control point vector derived based on the first and third control point vectors. The second control point vector may be derived based on at least one of the first control point vector, a predetermined difference value, or the size of the current/neighboring block. For example, the second control point vector may be derived as in Equation 9 below.

[Equation 9]

$$cpMvCorner[1][0] = (cpMvCorner[0][0] << 7) + ((cpMvCorner[2][1] - cpMvCorner[0][1]) << (7 + Log2(cbHeight/cbWidth)))$$

$$cpMvCorner[1][1] = (cpMvCorner[0][1] << 7) + ((cpMvCorner[2][0] - cpMvCorner[0][0]) << (7 + Log2(cbHeight/cbWidth)))$$

In the above-described K configured candidates ConstK, a value of K does not limit the position or priority of the configured candidates arranged in the candidate list.

In addition, all of the first to sixth configured candidates may be included in the candidate list, or only some of the candidates may be included in the candidate list.

For example, when it is determined that the current block uses three control point vectors, only a configured candidate generated through a combination of three of the first to fourth control point vectors may be used. When it is determined that the current block uses two control point vectors, a configured candidate generated through a combination of at least two of the first to fourth control point vectors may be used, or a configured candidate generated through a combination of only two of the first to fourth control point vectors may be used.

Alternatively, only some configured candidates may be included in the candidate list in consideration of the maximum number of affine candidates included in the candidate list. Here, the maximum number may be determined based on information about the maximum number signaled by the encoding apparatus, or may be variably determined in consideration of the above-described attribute of the current block. In this instance, the value K of the configured candidate ConstK may mean the priority to be inserted into the candidate list.

Meanwhile, when a difference value between two control point vectors belonging to the configured candidate is smaller than a predetermined threshold value, the configured candidate may not be inserted into the candidate list. The difference value between the two control point vectors may be divided into a difference value in a horizontal direction and a difference value in a vertical direction. Here, the difference value in the horizontal direction may refer to a difference value between a first control point vector 910 and a second control point vector 920, and may refer to a difference value between the first control point vector 910 and a third control point vector 930. The threshold value may refer to 0 or a vector having the magnitude pre-committed to the encoding/decoding apparatus.

FIG. 10 is a diagram illustrating a method of deriving motion information of a sub-block-based temporal candidate as an embodiment to which the present invention is applied.

The motion information of the temporal candidate according to the present invention may be derived from motion information of a collocated block. The motion information may be derived in units of sub-blocks.

Here, the collocated block is a block belonging to a picture different from that of a current block 1010 (that is, collocated picture), and may be a block 1040 at the same position as that of the current block or a block 1030 at a position shifted by a temporal vector from the position of the current block. The temporal vector may be determined based on a motion vector of a spatial neighboring block of the current block. The spatial neighboring block may refer to at least one of a left, lower left, upper, upper right, or upper left neighboring block of the current block. The temporal vector may be determined using only a neighboring block at a position pre-committed to the encoding/decoding apparatus. For example, the pre-committed position may be a left side 1011 or an upper side 1012, and may be the left side 1011 and the upper side 1012. When there is a plurality of neighboring blocks at the left side, it is possible to use a block located at one of a lowermost side, an uppermost side, or a center among the plurality of neighboring blocks. When there is a plurality of neighboring blocks at the upper side, it is possible to use a block located at one of a leftmost side, a rightmost side, or a center among the plurality of neighboring blocks.

In deriving a sub-block-based temporal candidate, the current block and/or the collocated block may be partitioned into a plurality of sub-blocks.

Here, the sub-block may have a fixed size/shape pre-committed to the encoding/decoding apparatus. For example, the sub-block is represented by an NxM block, and values of N and M may be integers of 4, 8 or more. The sub-block may be a square (N = M) or a rectangle (N > M, N < M). It may mean a size. Alternatively, the encoding apparatus may encode and signal information about the size/shape of the sub-block, and the decoding apparatus may determine the size/shape of the sub-block based on the signaled information.

Alternatively, the current block and/or the collocated block may be partitioned into a plurality of sub-blocks based on a predetermined number. Here, the number may be a fixed number pre-committed to the encoding/decoding apparatus, or may be variably determined in consideration of the block size/shape. Alternatively, the number may be determined based on number information signaled by the encoding apparatus.

Hereinafter, a method of deriving motion information of a temporal candidate in units of sub-blocks will be examined. A motion vector of the temporal candidate may be set as a motion vector stored for each sub-block of the collocated block. A reference picture index of the temporal candidate may be set to a value (for example, 0) pre-defined in the encoding/decoding apparatus. Alternatively, the reference picture index of the temporal candidate may be set as a reference picture index of the collocated block or a reference picture index of an upper left sub-block among sub-blocks. Alternatively, similarly to the motion vector, the reference picture index of the temporal candidate may be set as a reference picture index stored for each sub-block.

However, when there is an unavailable sub-block among sub-blocks belonging to the collocated block, a motion vector of the unavailable sub-block may be replaced with a motion vector of an available sub-block within the collocated block. Here, the available sub-block may refer to a block adjacent to any one of a left side, a right side, an upper side, or a lower side of the unavailable sub-block. Alternatively, the available sub-block may be a block at a position pre-committed to the encoding/decoding apparatus. For example, the pre-committed position may be a position of the lower right sub-block in the collocated block, or a position of the sub-block including a center position of the collocated block. The above-described sub-block-based temporal candidate may be added to the candidate list only when the available sub-block is present. Alternatively, the above-described sub-block-based temporal candidate may be added to the candidate list only when the sub-block at the pre-committed position is available.

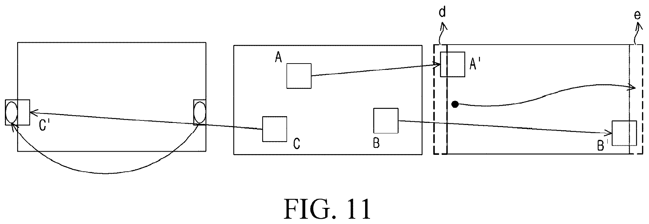

FIG. 11 illustrates an inter-prediction method in an ERP projection format as an embodiment to which the present invention is applied.

Referring to FIG. 11, in the case of the ERP projection format, a case in which a reference region specified by a motion vector spans a boundary of a reference picture may occur.

In this case, the boundary of the reference picture may be extended, and the extended region may be filled with data adjacent to the boundary in a horizontal direction (see A). Alternatively, the boundary of the reference picture may be extended, and the extended region may be filled with data (data having continuity or correlation with the boundary) adjacent to the opposite boundary (see B). Alternatively, data in a non-existent region can be filled using data adjacent to the opposite boundary (see C).

A and B require a process of extending the data of the reference picture. However, a computation process can be simplified. Further, C does not require additional memory due to the extension. However, an additional computation process may be required.

In the case of A and B, the size of the current picture and the size of the (extended) reference picture may not be the same. A predetermined adjustment process in consideration of such a difference in size may be included in a process of obtaining a prediction pixel.

When only horizontal lengths are compared, the current picture may have a range of 0 to (pic_width - 1), and the reference picture (extended as right side) may have a range of - L_offset to (pic_width - 1 + R_offset) or a range of 0 to (pic_width - 1 + L_offset + R_offset). In the former case, a prediction pixel may be obtained from an extended reference picture at a position obtained by adding the coordinates of the current block and the motion vector. In the latter case, a prediction pixel may be obtained at a readjusted position after the acquired position is adjusted. Here, Loffest and R_offset may refer to lengths extended in the left and right directions. In the present invention, it is presumed that coordinates are calculated based on a range of the current picture or the existing reference picture as before.

In the case of C, the position in the reference picture can be calculated by adding the coordinates of the current block and the motion vector. It is possible to verify whether the calculated pixel position is out of a range of the reference picture (<0,0> to <pic_width - 1, pic height - 1>). When the calculated pixel position does not exceed the range of the reference picture, a prediction pixel may be obtained from the calculated pixel position. On the other hand, when the calculated pixel position is out of the range of the reference picture, a position corresponding to the calculated position may be calculated at a position opposite to the inside of the boundary <inside the picture>(right side in the case of left side, and left side in the case of right side), and a prediction pixel may be obtained from the calculated corresponding position.

Based on at least one of the above-described embodiments, it is possible to perform inter-prediction at a reference picture boundary. An inter-prediction method at the reference picture boundary may be pre-committed by the encoding/decoding apparatus, and may be determined based on selection information specifying any one of the above-described embodiments and information related to a selected method (data processing method, extension size information, etc.), which can be applied equally to the embodiments described later.

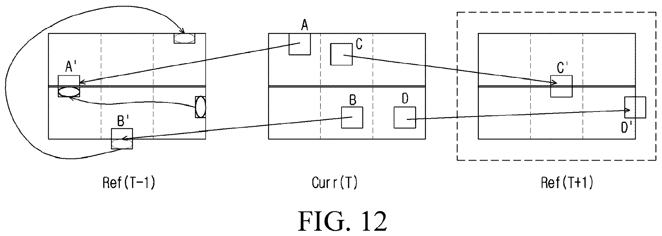

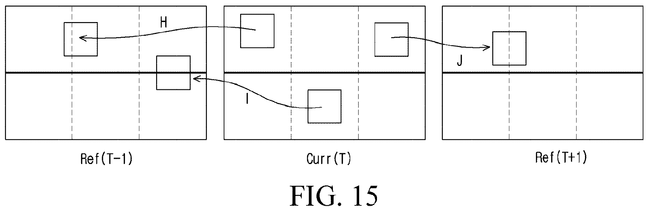

FIGS. 12 and 15 illustrate an inter-prediction method in a CMP projection format as an embodiment to which the present invention is applied.

Referring to FIG. 12, in the case of the CMP projection format, continuity in a three-dimensional space may exist between an upper 3x1 face and a lower 3x1 face due to region-wise packing. However, there may not be continuity in a three-dimensional space between the upper 3x1 face and the lower 3x1 face.

Likewise, there may be a case in which the reference region specified by the motion vector spans the boundary of the reference picture or a partial surface boundary. In the case of A, the reference region indicates the inside of the reference picture, but is located at a partial surface boundary (there is no mutual continuity in the three-dimensional space, and thus the correlation is low). In the case of B, the reference region is located at the boundary of the reference picture.

In particular, in the case of A, even though the reference region indicates the inside of the reference picture, since the reference region includes a discontinuous surface boundary, the accuracy of inter-prediction may be degraded.

In the case of A and B, the position of the reference region in the reference picture may be calculated by adding the coordinates of the current block and the motion vector. It is possible to verify whether at least a part of the reference region is out of the range of the reference picture or includes a discontinuous boundary within the reference picture.

When the reference region is out of the range of the reference picture, a position where continuity or correlation exists in a three-dimensional space may be determined, and a prediction pixel may be obtained from the determined position.

On the other hand, when the reference region does not exceed the range of the reference picture, it is possible to verify whether at least one pixel in the reference region indicated by the motion vector of the current block belongs to two or more surfaces. Here, a verification process may be performed through pixel positions such as an upper left side, an upper right side, a lower left side, and a lower right side of the current block.

When at least one pixel in the reference region does not belong to two or more surfaces, a prediction pixel may be obtained from the reference region. However, otherwise, it is possible to verify whether the surface has continuity with the surface to which the current block belongs. In the case of the reference region A', the upper region has continuity with the surface to which the current block belongs, and the lower region does not have continuity with the surface to which the current block belongs.

When the above-described continuity exists, a prediction pixel can be obtained from the reference region. However, otherwise, the prediction pixel may be obtained from a region having continuity or correlation in the three-dimensional space.

The above-described inter-prediction order is an example, and various modifications may be made by changing the order and changing some configurations.

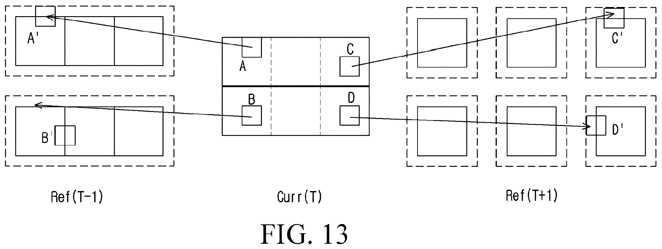

In the case of C and D, the reference picture may be extended, and the extended region may be filled by padding data adjacent to the boundary in the horizontal/vertical direction or using data of a correlated region. The case of D is the same as that in the description of ERP, and thus a detailed description will be omitted here. In the case of C, as in the case of A, the reference region is located inside the reference picture, but contains a surface boundary having low correlation. Therefore, when a separate extension region is not generated inside the reference picture, the accuracy of inter-prediction may be degraded, which will be described in detail with reference to FIG. 13.

In the case of C and D, the size of the current picture and the size of the reference picture may not be the same due to the extension of the reference picture. In this instance, the reference picture may have a range of (-L_offset, -U offset) to (pic_width - 1 + R offset, pic height - 1 + D_offset). Here, the L_, R_, U_, and D_ offsets may mean lengths extended in the left, right, up, and down directions of the reference picture. The offsets may have the same value or may have different values. The length extending according to the reference picture may be explicitly signaled or may be implicitly determined.

For example, it is possible to support one of the lengths that can be supported by the block partition section such as 2, 4, 8, etc. Alternatively, the extension length may be determined based on the minimum coding block, the maximum coding block, the minimum prediction block, and the maximum prediction block. Alternatively, the length may be determined based on units such as tiles and bricks.

For example, the length may be extended by the length of the maximum prediction block, and in this case, acquisition of prediction blocks of all blocks may be processed within the extended range. When the region indicated by the motion vector of the current block is out of the range of the extended reference picture even though the reference picture is extended, a prediction pixel of a part outside the range may be obtained through horizontal, vertical, diagonal padding, etc.

Referring to FIG. 13, cases A to D may correspond to cases in which a reference picture is extended in units of one or more surfaces. In the case of A and B, a reference picture (or a sub-reference picture) is extended by combining surfaces having continuity. The case of C and D are examples in which the reference picture is individually extended for each surface. Data processing of the extended region is the same as/similar to that of the above-described embodiment. In the above-described embodiment, one range for a reference picture exists. In this example, since each region (referred to as a sub-reference picture) is extended by partitioning the reference picture into two or more parts, overlapping ranges may be generated.

In the examples of A and B, the extended sub-reference picture positioned at the top has a range of (-L_offset, -U_offset) to (pic_width - 1 + R_offset, pic_height/2 - 1 + D_offset), and the extended sub-reference picture positioned at the bottom has a range of (-Loffset, pic_height/2 - U_offset) to (pic_width - 1 + R_offset, pic_height - 1 + D_offset). It is presumed that the extended left, right, upper and lower lengths of each sub-reference picture are the same. However, the lengths extending in the left, right, up, and down directions may be set equally in all the units to be extended, or may be set differently. In addition, the extension lengths may be individually set according to the extended units.

In this instance, the coordinates of the range extended downward from the upper sub-reference picture are the same as the coordinates inside the lower sub-reference picture. However, in the case of the upper sub-reference picture, the corresponding region has extended correlated data, and in the case of the lower sub-reference picture, the corresponding region has the original data before extension.

In summary, the reference picture may have a range of (-L _offset, -U offset) to (pic_width - 1 + R offset, pic height - 1 + D_offset). In general, it is correct that one pixel value is allocated to each position. However, since a reference video is extended by being partitioned into two or more regions in consideration of a characteristic of an omnidirectional video, two or more pixel values may be allocated in a partial range. In this case, it may be required to determine which pixel value is to be obtained as the predicted pixel value at a position to which two or more pixel values are allocated.

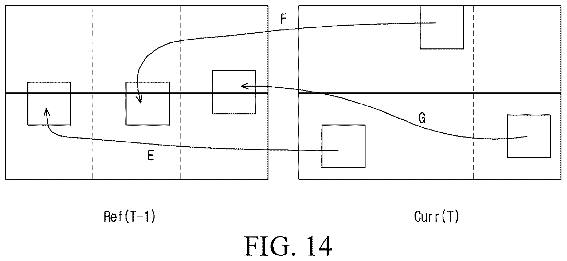

Referring to FIG. 14, in the case of E, it is possible to determine which sub-reference picture contains a larger region, and obtain a prediction value using data of the sub-reference picture including the larger region.

In the case of F, when the sub-reference picture including the current block includes a preset number of pixels or more, or includes a predetermined area, data of the corresponding sub-reference picture may be used. However, otherwise, processing using data of a sub-reference picture of a region including a larger area, such as E, may be possible.

The case of G is the case where both sub-reference pictures include equal regions. In this case, priority is given to the sub-reference picture including the current block, and data of the corresponding sub-reference picture can be used. This example can be included as detailed conditions of F and E.

In summary, when a region indicated by the motion vector of the current block is a boundary between sub-reference pictures, it is possible to determine a sub-reference picture whose data is used according to the coverage area and whether the sub-reference picture is the same as the current block. It is possible to determine a sub-reference picture data whose data is used to perform inter-prediction by including all or some of the above conditions according to the encoding/decoding setting.

In the above-described example, each region is extended by partitioning the reference picture into two parts. However, in this example, a case in which more sub-reference pictures are generated in units of surfaces will be described.

In FIG. 15, it is presumed that each surface unit is a sub-reference picture. Likewise, it is necessary to determine which pixel value is to be obtained as the prediction pixel value at a position where two or more pixel values are allocated.

Referring to FIG. 15, in the case of H, it is possible to use data of a sub-reference picture in a region covered more, or it is possible to use data of a sub-reference picture including the current block.

For example, when a sub-reference picture including the current block is included by the pre-set number of pixels or in a pre-defined area or more, it is possible to use data of the corresponding sub-reference picture. Alternatively, when data of a sub-reference picture in a region covered more is used, it is possible to use data of the corresponding sub-reference picture. However, when the included regions are the same, it is possible to restrict to use of data of the sub-reference picture including the current block.

In the case of I, it is possible to use data of a sub-reference picture in a region covered more. In this example, sub-reference pictures are supported in units of surfaces. However, the surface setting has a characteristic in which an upper 3x1 region and a lower 3x1 region are discontinuous, and thus priority may be given to a sub-reference picture on a side having a continuous characteristic rather than a sub-reference picture on a side having a discontinuous characteristic.

In the case of J, it is possible to use data of a sub-reference picture in a region covered more. However, the included regions are equal, and in this example, the sub-reference picture including the current block (upper right of 3 x 2 region) is not covered. In addition, the sub-reference pictures (upper left and center of 3 x 2 region) belong to the same 3x1 region as the sub-reference picture including the current block. In this instance, priority may be given to one closer to the sub-reference picture including the current block.

In summary, when a region indicated by the motion vector of the current block is a boundary between sub-reference pictures, it is possible to determine a sub-reference picture whose data is used according to a coverage area and a priority to use a sub-reference picture.

Meanwhile, a method of performing inter-prediction based on affine motion modeling has been described with reference to FIGS. 7 to 10, which can be used identically/similarly to encoding/decoding 360 video, and a detailed description thereof will be omitted.

The methods according to the present invention may be implemented in the form of program instructions that can be executed through various computer means and recorded in a computer-readable medium. The computer-readable medium may include program instructions, data files, data structures, etc. alone or in combination. The program instructions recorded on the computer-readable medium may be specially designed and configured for the present invention, or may be known and available to those skilled in computer software.

Examples of the computer-readable medium may include a hardware device specially configured to store and execute a program instruction such as a ROM, a RAM, or a flash memory. Examples of the program instruction may include high-level language codes that can be executed by a computer using an interpreter, etc., as well as machine language codes such as those produced by a compiler. The above-described hardware device may be configured to operate as at least one software module to perform the operations of the present invention, and vice versa.

In addition, the above-described method or apparatus may be implemented by combining all or some configurations or functions, or may be implemented by separating the configurations or functions.

Even though description has been given above with reference to preferred embodiments of the present invention, it is to be understood that those skilled in the art can make various modifications and changes to the present invention without departing from the scope not departing from the spirit and scope of the present invention set forth in the following claims.

[Industrial Applicability]

The present invention may be used in encoding/decoding video signals.

**Claims**

1. A method of decoding a video signal, the method comprising:

   constructing a merge candidate list of a current block;
   deriving motion information of the current block from the merge candidate list; and
   performing inter-prediction of the current block using the motion information,
   wherein the merge candidate list comprises at least one of a spatial merge candidate, a temporal merge candidate, or a combined merge candidate, and
   the combined merge candidate is derived by combining n merge candidates belonging to the merge candidate list.

2. The method according to claim 1, wherein the n merge candidates are merge candidates corresponding to indices of 0 to (n-1) in the merge candidate list.

3. The method according to claim 1, wherein an index of the combined merge candidate is larger than an index of the temporal merge candidate.

4. The method according to claim 1,
   wherein the n merge candidates include a first merge candidate and a second merge candidate, and motion information of the combined merge candidate is derived in consideration of a prediction direction of the first merge candidate and a prediction direction of the second merge candidate.

5. The method according to claim 4, wherein the motion information of the combined merge candidate is derived by a weighted average of motion information of the first merge candidate and motion information of the second merge candidate.

6. The method according to claim 5, wherein a weight of the weighted average is any one of [1:1], [1:2], [1:3], or [2:3].

FIG. 1

FIG. 2

FIG. 3

FIG. 4

FIG. 5

```
┌─────────────────────────────┐
│      ESTABLISH MERGE         │── S600
│      CANDIDATE LIST          │
└─────────────────────────────┘
              │
              ▼
┌─────────────────────────────┐
│       DERIVE MOTION          │
│  INFORMATION OF CURRENT      │── S610
│   BLOCK FROM MERGE           │
│    CANDIDATE LIST            │
└─────────────────────────────┘
              │
              ▼
┌─────────────────────────────┐
│  CARRY OUT INTER-PREDICTION  │
│ USING MOTION INFORMATION     │── S620
│    OF CURRENT BLOCK          │
└─────────────────────────────┘
```

FIG. 6

```
┌─────────────────────────────┐
│  GENERATE CANDIDATE LIST FOR │
│     MOTION INFORMATION       │── S700
│ PREDICTION OF CURRENT BLOCK  │
└─────────────────────────────┘
              │
              ▼
┌─────────────────────────────┐
│ DERIVE CONTROL POINT VECTOR  │
│ OF CURRENT BLOCK BASED ON    │── S710
│      CANDIDATE LIST AND      │
│      CANDIDATE INDEX         │
└─────────────────────────────┘
              │
              ▼
┌─────────────────────────────┐
│   DERIVE MOTION VECTOR OF    │
│   CURRENT BLOCK BASED ON     │── S720
│   CONTROL POINT VECTOR OF    │
│      CURRENT BLOCK           │
└─────────────────────────────┘
              │
              ▼
┌─────────────────────────────┐
│  CARRY OUT INTER-PREDICTION  │
│  FOR CURRENT BLOCK USING     │── S730
│      MOTION VECTOR           │
└─────────────────────────────┘
```

FIG. 7

FIG. 8

FIG. 9

FIG. 10

FIG. 11

Ref(T-1)                    Curr(T)                    Ref(T+1)

# FIG. 12

FIG. 13

FIG. 14

FIG. 15

## INTERNATIONAL SEARCH REPORT

International application No.

PCT/KR2019/007981

| A. CLASSIFICATION OF SUBJECT MATTER |
|---|
| H04N 19/587(2014.01)i, H04N 19/513(2014.01)i, H04N 19/109(2014.01)i, H04N 19/176(2014.01)i, H04N 19/11(2014.01)i, H04N 19/593(2014.01)i, H04N 19/70(2014.01)i |
| According to International Patent Classification (IPC) or to both national classification and IPC |

| B. FIELDS SEARCHED |
|---|
| Minimum documentation searched (classification system followed by classification symbols) |
| H04N 19/587; H04N 19/105; H04N 19/119; H04N 19/146; H04N 19/503; H04N 19/51; H04N 19/513; H04N 19/70; H04N 19/109; H04N 19/176; H04N 19/593 |
| Documentation searched other than minimum documentation to the extent that such documents are included in the fields searched |
| Korean utility models and applications for utility models: IPC as above |
| Japanese utility models and applications for utility models: IPC as above |
| Electronic data base consulted during the international search (name of data base and, where practicable, search terms used) |
| eKOMPASS (KIPO internal) & Keywords: motion vector, neighbor block, spatial, temporal, merge, index |

### C. DOCUMENTS CONSIDERED TO BE RELEVANT

| Category* | Citation of document, with indication, where appropriate, of the relevant passages | Relevant to claim No. |
|---|---|---|
| X | KR 10-2014-0018953 A (PANASONIC CORPORATION) 13 February 2014 | 1-4 |
| | See paragraphs [0031]-[0034], [0043], [0093]-[0096]; claim 8; and figures 4, 7, 11. | |
| Y | | 5-6 |
| Y | KR 10-2018-0007345 A (ELECTRONICS AND TELECOMMUNICATIONS RESEARCH INSTITUTE) 22 January 2018 | 5-6 |
| | See paragraphs [0444], [0447]. | |
| X | KR 10-2014-0082969 A (PANASONIC CORPORATION) 03 July 2014 | 1-4 |
| | See paragraphs [0098]-[0122]; claim 10; and figures 10a-11. | |
| X | KR 10-2018-0035190 A (INTELLECTUAL DISCOVERY CO., LTD.) 05 April 2018 | 1-4 |
| | See paragraphs [0105]-[0128]; claims 1-2; and figures 8-13. | |
| A | JP 2016-048953 A (JVC KENWOOD CORP.) 07 April 2016 | 1-6 |
| | See paragraphs [0023]-[0118]; and figures 3-18. | |

☐ Further documents are listed in the continuation of Box C.     ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 OCTOBER 2019 (16.10.2019) | 16 OCTOBER 2019 (16.10.2019) |

| Name and mailing address of the ISA/KR | Authorized officer |
|---|---|
| Korean Intellectual Property Office Government Complex Daejeon Building 4, 189, Cheongsa-ro, Seo-gu, Daejeon, 35208, Republic of Korea Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2019/007981**

| Patent document cited in search report | Publication date | Patent family member | Publication date |
|---|---|---|---|
| KR 10-2014-0018953 A | 13/02/2014 | AU 2012-264031 A1 | 07/11/2013 |
| | | CA 2834190 A1 | 06/12/2012 |
| | | CN 103563385 A | 05/02/2014 |
| | | EP 2717577 A1 | 09/04/2014 |
| | | JP 2016-167869 A | 15/09/2016 |
| | | JP 5937588 B2 | 22/06/2016 |
| | | MX 2013012459 A | 02/12/2013 |
| | | SG 194746 A1 | 30/12/2013 |
| | | TW 201304556 A | 16/01/2013 |
| | | TW I587691 B | 11/06/2017 |
| | | US 2012-0307902 A1 | 06/12/2012 |
| | | US 2015-0117544 A1 | 30/04/2015 |
| | | US 8953689 B2 | 10/02/2015 |
| | | US 9560373 B2 | 31/01/2017 |
| | | WO 2012-164906 A1 | 06/12/2012 |
| KR 10-2018-0007345 A | 22/01/2018 | CN 109479141 A | 15/03/2019 |
| | | US 2019-0200040 A1 | 27/06/2019 |
| | | WO 2018-012886 A1 | 18/01/2018 |
| KR 10-2014-0082969 A | 03/07/2014 | AR 088390 A1 | 28/05/2014 |
| | | BR 112014008403 A2 | 04/04/2017 |
| | | CA 2850595 A1 | 25/04/2013 |
| | | CN 103858428 A | 11/06/2014 |
| | | EP 2770738 A1 | 27/08/2014 |
| | | IN 2602CHN2014 A | 07/08/2015 |
| | | JP 6308495 B2 | 11/04/2018 |
| | | MX 2014003991 A | 07/05/2014 |
| | | TW 201334561 A | 16/08/2013 |
| | | TW I593276 B | 21/07/2017 |
| | | US 2013-0101042 A1 | 25/04/2013 |
| | | WO 2013-057877 A1 | 25/04/2013 |
| KR 10-2018-0035190 A | 05/04/2018 | KR 10-1835625 B1 | 19/04/2018 |
| | | KR 10-2013-0045785 A | 06/05/2013 |
| | | US 2014-0241435 A1 | 28/08/2014 |
| | | WO 2013-062174 A1 | 02/05/2013 |
| JP 2016-048953 A | 07/04/2016 | BR 112014016922 A2 | 13/06/2017 |
| | | CN 104041043 A | 10/09/2014 |
| | | CN 108235032 A | 29/06/2018 |
| | | JP 2013-168929 A | 29/08/2013 |
| | | JP 2016-027731 A | 18/02/2016 |
| | | RU 2014132439 A | 10/03/2016 |
| | | TW 201334566 A | 16/08/2013 |
| | | US 2014-0321547 A1 | 30/10/2014 |
| | | US 9686550 B2 | 20/06/2017 |
| | | WO 2013-108631 A1 | 25/07/2013 |

Form PCT/ISA/210 (patent family annex) (January 2015)